# EUROPEAN PATENT APPLICATION

(11) **EP 4 604 051 A1**
(43) Date of publication of application: **20.08.2025**
(21) Application number: 24800134.9
(22) Date of filing: 15.01.2024
(51) Int. Cl.: G06T 5/50, G06T 7/70, G06T 11/60, H04N 13/156, H04N 13/261, G06T 7/11, G06V 20/64

(54) **ELECTRONIC DEVICE AND METHOD FOR CONTROLLING SAME**

(30) Priority: 02.05.2023 KR 20230057334
(71) Applicant: Samsung Electronics Co., Ltd., Suwon-si, Gyeonggi-do 16677 (KR)
(72) Inventor: KIM, Jonghwan, Suwon-si Gyeonggi-do 16677 (KR)
(74) Representative: Appleyard Lees IP LLP
(86) International application number: PCT/KR2024/000685
(87) International publication number: WO 2024/228445

(57) **Abstract**

An electronic apparatus, may include: at least one memory configured to store content and instructions; and at least one processor operatively connected to the at least one memory, The at least one processor may be configured to execute the instructions to: identify a target object in the content stored in the at least one memory, obtain position information of the target object, identify a target section to apply a three-dimensional (3D) effect of displaying a portion of the target object at a letter box based on the position information of the target object, the target section may include a target image, obtain a basic layer corresponding to a background of the target image and a 3D layer corresponding to the 3D effect based on the target image, obtain a composite image may include the letter box by combining the basic layer and the 3D layer, and provide the composite image.

## Description

### [Technical Field]

The disclosure relates to an electronic apparatus and a controlling method thereof, and more particularly to an electronic apparatus providing a 3D effect by displaying an object in a letter box and a controlling method thereof.

### [Background Art]

An electronic apparatus may apply an occlusion effect to an image, using a monocular. This is one of several elements that can create a three-dimensional (3D) effect.

The above may be a method exploiting a cognitive characteristic. In other words, humans recognize that a covered object is farther away than a covering object when two different objects are overlapped.

A user trying to provide the 3D effect can select an object to be used in applying the 3D effect from among a plurality of objects included in a content.

The user can select an appropriate section to apply the 3D effect from among an overall content playback time.

There has been an inconvenience for the user having to directly select whether a content analysis is necessary, how to apply the 3D effect for which object, and in what image to provide the 3D effect.

### [Disclosure]

### [Technical Solution]

Provided are an electronic apparatus that provides a 3D effect by analyzing received content and displaying an object in a letter box at a specific target section and a controlling method thereof.

According to an aspect of the disclosure, an electronic apparatus, may include: at least one memory configured to store content and instructions; and at least one processor operatively connected to the at least one memory, The at least one processor may be configured to execute the instructions to: identify a target object in the content stored in the at least one memory, obtain position information of the target object, identify a target section to apply a three-dimensional (3D) effect of displaying a portion of the target object at a letter box based on the position information of the target object, the target section may include a target image, obtain a basic layer corresponding to a background of the target image and a 3D layer corresponding to the 3D effect based on the target image, obtain a composite image may include the letter box by combining the basic layer and the 3D layer, and provide the composite image.

The at least one processor may be further configured to execute the instructions to: identify whether the content comprises the letter box, and based on identifying that the content does not include the letter box, obtain the composite image by adding the letter box to at least one of the basic layer or the 3D layer.

The at least one processor may be further configured to execute the instructions to: obtain a 3D image corresponding to the target object, and obtain the 3D layer may include the 3D image.

The at least one processor may be further configured to execute the instructions to: determine a position of the letter box based on a position of content information of the content. The content information may include at least one of a graphic user interface (UI) or a text UI representing the content.

The content may include a plurality of images. The target object may change position in the plurality of images. The at least one processor may be further configured to execute the instructions to: identify the target object from a plurality of objects identified in the content by analyzing features of the plurality of objects.

The at least one processor may be further configured to execute the instructions to: based on the position information, identify a predetermined event, and based on a time-point at which the predetermined event is identified, identify the target section.

The at least one processor may be further configured to execute the instructions to: identify a letter box area and a content area from a whole area of the content, identify a first event in which the target object moves from the letter box area to the content area or a second event in which the target object moves from the content area to the letter box area, and identify the first event or the second event as the predetermined event.

The at least one processor may be further configured to execute the instructions to: obtain first position information of the target object at a first time-point and second position information of the target object at a second time-point, and identify the predetermined event based on the first position information and the second position information.

The first position information may include at least one of a first minimum coordinate value, a first maximum coordinate value, or a first average coordinate value of the target object at the first time-point. The second position information may include at least one of a second minimum coordinate value, a second maximum coordinate value, or a second average coordinate value of the target object at the second time-point. The at least one processor may be configured to execute the instructions to: obtain movement information of the target object based on the first position information and the second position information, and identify the predetermined event based on the movement information.

The at least one processor may be configured to execute the instructions to: identify a bounding box of the target object, obtain the first position information based on a first plurality of coordinate values representing the bounding box at the first time-point, and obtain the second position information based on a second plurality of coordinate values representing the bounding box at the second time-point.

According to an aspect of the disclosure, a method of controlling an electronic apparatus storing content, may include: identifying a target object in the content; obtaining position information of the target object; identifying a target section to apply a three-dimensional (3D) effect of displaying a portion of the target object at a letter box based on the position information of the target object, the target section may include a target image; obtaining a basic layer corresponding to a background of the target image and a 3D layer corresponding to the 3D effect based on the target image; obtaining a composite image may include the letter box by combining the basic layer and the 3D layer; and providing the composite image.

The method of claim 11, further may include: identifying whether the content comprises the letter box; and based on the content not may include the letter box, obtaining the composite image by adding the letter box to at least one of the basic layer or the 3D layer.

The method of claim 11, further may include: obtaining a 3D image corresponding to the target object; and obtaining the 3D layer may include the 3D image.

The method of claim 11, further may include: determining a position of the letter box based on a position of content information of the content. The content information may include at least one of a graphic user interface (UI) or a text UI representing the content.

The content may include a plurality of images. The target object may change position in the plurality of images. The method further may include: identifying the target object from a plurality of objects identified in the content by analyzing features of the plurality of objects.

The method further may include: based on the position information, identifying a predetermined event, and based on a time-point at which the predetermined event is identified, identifying the target section.

The method further may include: identifying a letter box area and a content area from a whole area of the content, identifying a first event in which the target object moves from the letter box area to the content area or a second event in which the target object moves from the content area to the letter box area, and identifying the first event or the second event as the predetermined event.

The method of further may include: obtaining first position information of the target object at a first time-point and second position information of the target object at a second time-point, and identifying the predetermined event based on the first position information and the second position information.

The first position information may include at least one of a first minimum coordinate value, a first maximum coordinate value, or a first average coordinate value of the target object at the first time-point. The second position information may include at least one of a second minimum coordinate value, a second maximum coordinate value, or a second average coordinate value of the target object at the second time-point. The method may further include: obtaining movement information of the target object based on the first position information and the second position information, and identifying the predetermined event based on the movement information.

The method further may include: identifying a bounding box of the target object, obtaining the first position information based on a first plurality of coordinate values representing the bounding box at the first time-point, and obtaining the second position information based on a second plurality of coordinate values representing the bounding box at the second time-point.

### [Description of Drawings]

The above and other aspects, features, and advantages of certain embodiments of the present disclosure will be more apparent from the following description taken in conjunction with the accompanying drawings, in which:
FIG. 1 is a diagram illustrating an electronic apparatus providing a 3D effect according to one or more embodiments;
FIG. 2 is a block diagram illustrating an electronic apparatus according to an embodiment;
FIG. 3 is a block diagram illustrating a detailed configuration of the electronic apparatus of FIG. 2;
FIG. 4 is a diagram illustrating an operation of identifying whether a letter box is included in a content;
FIG. 5 is a diagram illustrating an operation of providing a composite image;
FIG. 6 is a diagram illustrating an operation of applying a 3D effect to a content without a letter box;
FIG. 7 is a diagram illustrating an operation of applying a 3D effect to a content with a letter box;
FIG. 8 is a diagram illustrating an operation of applying a 3D effect to an image;
FIG. 9 is a diagram illustrating an operation of identifying a target object;
FIG. 10 is a diagram illustrating an operation of objecting movement information of a target object;
FIG. 11 is a diagram illustrating an operation of obtaining movement information of a target object according to an embodiment;
FIG. 12 is a diagram illustrating an operation of objecting movement information of a target object according to an embodiment;
FIG. 13 is a diagram illustrating an operation of obtaining movement information of a target object according to an embodiment;
FIG. 14 is a diagram illustrating a letter box area and a content area;
FIG. 15 is a diagram illustrating a predetermined event of a target object according to an embodiment;
FIG. 16 is a diagram illustrating a composite image applied with a 3D effect according to an embodiment;
FIG. 17 is a diagram illustrating a predetermined event of a target object according to an embodiment;
FIG. 18 is a diagram illustrating a composite image applied with a 3D effect according to an embodiment;
FIG. 19 is a diagram illustrating a predetermined event of a target object according to an embodiment;
FIG. 20 is a diagram illustrating a composite image applied with a 3D effect according to an embodiment;
FIG. 21 is a diagram illustrating a predetermined event of a target object according to an embodiment;
FIG. 22 is a diagram illustrating a composite image applied with a 3D effect according to an embodiment;
FIG. 23 is a diagram illustrating a predetermined event of a target object according to an embodiment;
FIG. 24 is a diagram illustrating a composite image applied with a 3D effect according to an embodiment;
FIG. 25 is a diagram illustrating a predetermined event of a target object according to an embodiment;
FIG. 26 is a diagram illustrating a composite image applied with a 3D effect according to an embodiment;
FIG. 27 is a diagram illustrating an embodiment in which content information is damaged;
FIG. 28 is a diagram illustrating an operation of providing content information according to an embodiment;
FIG. 29 is a diagram illustrating an operation of providing content information according to an embodiment;
FIG. 30 is a diagram illustrating an operation of generating a composite image when there is no letter box according to an embodiment;
FIG. 31 is a diagram illustrating an operation of generating a composite image when there is no letter box according to an embodiment;
FIG. 32 is a diagram illustrating an operation of generating a composite image when there is no letter box according to an embodiment;
FIG. 33 is a diagram illustrating an operation of generating a composite image when there is no letter box according to an embodiment;
FIG. 34 is a diagram illustrating an operation of generating a composite image when there is a letter box according to an embodiment;
FIG. 35 is a diagram illustrating an operation of generating a composite image when there is a letter box according to an embodiment;
FIG. 36 is a diagram illustrating an operation of generating a composite image when there is a letter box according to an embodiment;
FIG. 37 is a diagram illustrating an operation of generating a composite image when there is a letter box according to an embodiment;
FIG. 38 is a diagram illustrating an operation of changing a size of a letter box;
FIG. 39 is a diagram illustrating an operation of playing back content with (or having) a delay time placed therein; and
FIG. 40 is a flowchart illustrating a controlling method of an electronic apparatus according to an embodiment.

### [Detailed Description of Exemplary Embodiments]

Certain example embodiments disclosure will be described in detail below with reference to the accompanying drawings.

Terms used in describing the embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the corresponding description. Accordingly, the terms used herein are not to be understood simply as its designation but based on the meaning of the term and the overall context of the disclosure.

In the disclosure, expressions such as "have," "may have," "include," "may include," or the like are used to designate a presence of a corresponding characteristic (e.g., elements such as numerical value, function, operation, or component), and not to preclude a presence or a possibility of additional characteristics.

The expression "at least one of A or B" is to be understood as indicating any one of "A" or "B" or "A and B."

Expressions such as "first," "second," "1st," "2nd," and so on used herein may be used to refer to various elements regardless of order and/or importance. Further, it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used herein perform at least one function or operation, and may be implemented with a hardware or software, or implemented with a combination of hardware and software. In addition, a plurality of "modules" or a plurality of "parts," except for a "module" or a "part" which needs to be implemented to a specific hardware, may be integrated in at least one module and implemented as at least one processor.

In the disclosure, the term "user" may refer to a person using an electronic apparatus or an apparatus (e.g., artificial intelligence electronic apparatus) using the electronic apparatus.

One or more example embodiments of the disclosure will be described in greater detail below with reference to the accompanied drawings.

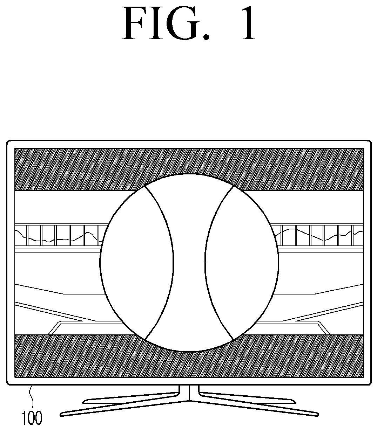

FIG. 1 is a diagram illustrating an electronic apparatus 100 providing a three-dimensional (3D) effect.

Referring to FIG. 1, the electronic apparatus 100 may provide a content applied with the 3D effect. The 3D effect may mean an occlusion effect. The occlusion effect may be an effect which provides a sense of three dimensions by displaying objects in an overlapping manner.

For example, the 3D effect may include an out painting technique. The out painting technique may be an effect which makes a first object appear as if it is closer than a second object by displaying the first object over (or in front of) the second object.

The electronic apparatus 100 may provide the 3D effect by processing the content. Specifically, the electronic apparatus 100 may receive content, and convert it to a content to which the 3D effect is applicable. The electronic apparatus 100 may provide the converted content to a user.

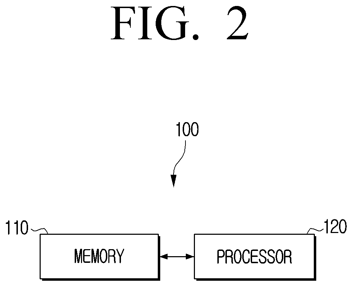

FIG. 2 is a block diagram illustrating the electronic apparatus 100 according to an embodiment.

Referring to FIG. 2, the electronic apparatus 100 may include at least one of (at least one) memory 110 or at least one processor 120.

The memory 110 may store content. The electronic apparatus 100 may receive content from an external apparatus or an external server. The electronic apparatus 100 may store the received content in the memory 110. The electronic apparatus 100 may receive a portion of the content in a streaming method, and store the received portion of content in the memory 110. The memory 110 may be a temporary memory.

The at least one processor 120 may identify a predetermined target object from a content stored in the memory 110, obtain position information of the target object, identify a target section to apply the three-dimensional (3D) effect which displays a portion of the target object at the letter box based on position information of the target object, obtain a basic layer corresponding to a background of a target image and a 3D layer corresponding to the 3D effect based on the target image included in the target section, obtain a composite image including a letter box by combining the basic layer and the 3D layer, and provide the composite image.

The 3D effect intended to be provided by the at least one processor 120 may be the out painting technique. The out painting technique may be a technique of providing the 3D effect by adjusting the occlusion of objects displayed in an image. The out painting technique may be a method of providing the composite image by adding a portion of information (e.g., a portion of the object) for applying the 3D effect to an original image.

The content may include a plurality of images. The content may identify a target object from at least one image from the plurality of images.

The image that is a subject of analysis from the plurality of images included in the content may be described as an input image or an analysis image. The content itself may mean one analysis image according to various embodiments.

According to an embodiment, the target object may be a predetermined object. The predetermined object may be changed by a user setting. The predetermined object may be a movable object. For example, the predetermined object may be a ball, an animal, a person, a face, an automobile, an air plane, a bullet, or the like.

According to an embodiment, the target object may be an object determined by the content. The electronic apparatus 100 may determine an object for applying the 3D effect as the target object based on at least one image (or image frame) included in the content.

The target object may be an object which changes position in the plurality of images of the content. The at least one processor 120 may identify the target object from the plurality of objects by analyzing the characteristics of the plurality of objects identified in the content. The at least one processor 120 may determine whether the at least one object included in the content is the target object by analyzing the characteristics of the object.

The at least one processor 120 may obtain position information of the target object. The at least one processor 120 may obtain the position information of the target object from respective images included in the content.

The at least one processor 120 may identify a position of the target object from the content (or the input image included in the content).

The at least one processor 120 may identify the position information of the target object based on a plurality of coordinate values representing the target object.

For example, the position information of the target object may be a set of coordinate values for displaying the target object.

The position information may include at least one of a minimum coordinate value, a maximum coordinate value, or an average coordinate value. According to an embodiment, the coordinate value may include at least one of an x-axis or a y-axis as a reference axis. For example, the coordinate value may be (x), (y), and (x,y).

According to an embodiment, the coordinate value may include at least one of an x-axis, a y-axis, or a z-axis as the reference axis. For example, the coordinate value may be (x,y,z).

The at least one processor 120 may obtain at least one of a minimum coordinate value 21, a maximum coordinate value 22, or an average coordinate value 23 from the set of coordinate values for displaying the target object.

The at least one processor 120 may obtain a minimum coordinate value which includes an x-axis minimum value and a y-axis minimum value from the set of coordinate values for displaying the target object.

The at least one processor 120 may obtain a maximum coordinate value which includes an x-axis maximum value and a y-axis maximum value from the set of coordinate values for displaying the target object.

The at least one processor 120 may obtain the average coordinate value which includes an x-axis average value and a y-axis average value from the set of coordinate values for displaying the target object.

According to an embodiment, the average value may be an average of all of the coordinate values.

According to an embodiment, the average value may be an average of the minimum value and the maximum value of the coordinate values.

The at least one processor 120 may obtain first position information of the target object at a first time-point and second position information of the target object at a second time-point, and identify a predetermined event based on the first position information and the second position information.

A position of the target object may change in the respective images of the content. The at least one processor 120 may track a movement of the target object based on position information of the target object.

The at least one processor 120 may analyze the movement of the target object by analyzing an image at the first time-point and an image at the second time-point.

The first position information may include at least one of the minimum coordinate value, the maximum coordinate value, or the average coordinate value of the target object at the first time-point.

The second position information may include at least one of the minimum coordinate value, the maximum coordinate value, or the average coordinate value of the target object at the second time-point.

The at least one processor 120 may obtain movement information of the target object based on the first position information and the second position information, and identify a predetermined event based on the movement information.

The movement information may include at least one of direction information or speed information. The at least one processor 120 may obtain the movement information based on the first position information and the second position information.

The at least one processor 120 may identify a bounding box 20 of the target object, obtain the first position information based on a plurality of coordinate values which represent the bounding box at the first time-point, and obtain the second position information based on a plurality of coordinate values which represent the bounding box at the second time-point.

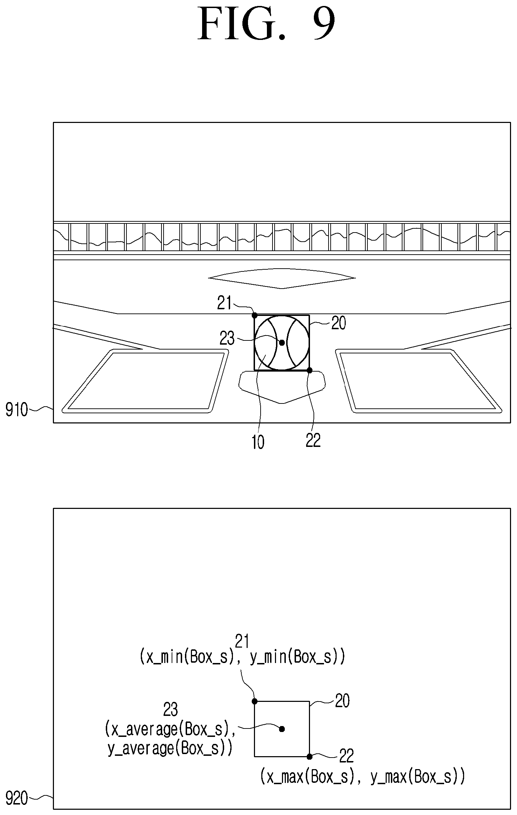

Detailed descriptions associated with the position information of the target object will be described with reference to FIG. 9 to FIG. 13.

The at least one processor 120 may identify the target section to apply the 3D effect from a whole section of the content based on the position information of the target object.

For example, the at least one processor 120 may determine to apply the 3D effect to an image between 10 seconds and 11 seconds in a 60 second content. The target section may be between 10 seconds and 11 seconds.

The at least one processor 120 may identify, when a predetermined event is identified based on the position information of the target object, the target section based on a time-point at which the predetermined event is identified.

The at least one processor 120 may determine whether a predetermined event is identifiable based on the position information of the target object. The at least one processor 120 may identify the target section based on the time-point at which the predetermined event is identified
The at least one processor 120 may distinguish a letter box area and a content area from a whole area of the content, and identify a first event in which the target object moves from the letter box area to the content area or a second event in which the target object moves from the content area to the letter box area as the predetermined event.

The letter box area may mean an area at which the letter box is to be displayed in the composite image. The letter box area may be an area at which text information is displayed with a darkish color (e.g., black color) as the background. The letter box area may be an area at which only a color value of a predetermined number is displayed.

For example, the content may include an area which includes a black background at an upper side or a lower side from the whole area. The area including the black background may be an area at which subtitles are displayed. The letter box area may be an area at which the background of a first color (e.g., black color) and subtitles of a second color (e.g., white color) are displayed.

The content area may mean an area at which a content of the content is displayed. The content area may be an area excluding the letter box area from the whole area. The content area may be an area at which various color values are displayed.

The letter box area may include two areas. The letter box area may include a first letter box area 31 and a second letter box area 32. The first letter box area 31 may be an area positioned at an upper side of the whole area. The second letter box area 32 may be an area positioned at a lower side of the whole area.

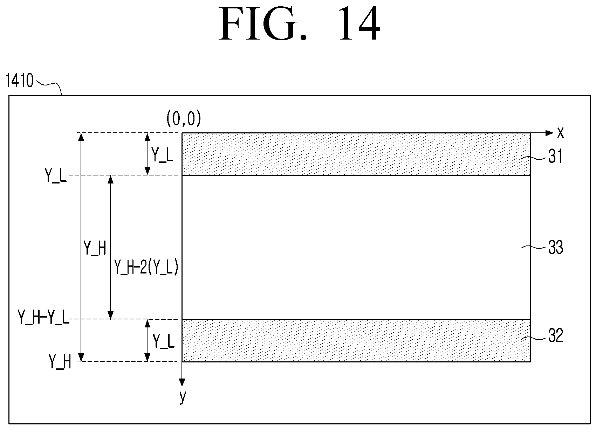

Descriptions associated with the letter box area and the content area will be described with reference to FIG. 14.

The at least one processor 120 may analyze if the target object is positioned at the letter box area or positioned at the content area. The at least one processor 120 may identify the predetermined event based on the position of the target object.

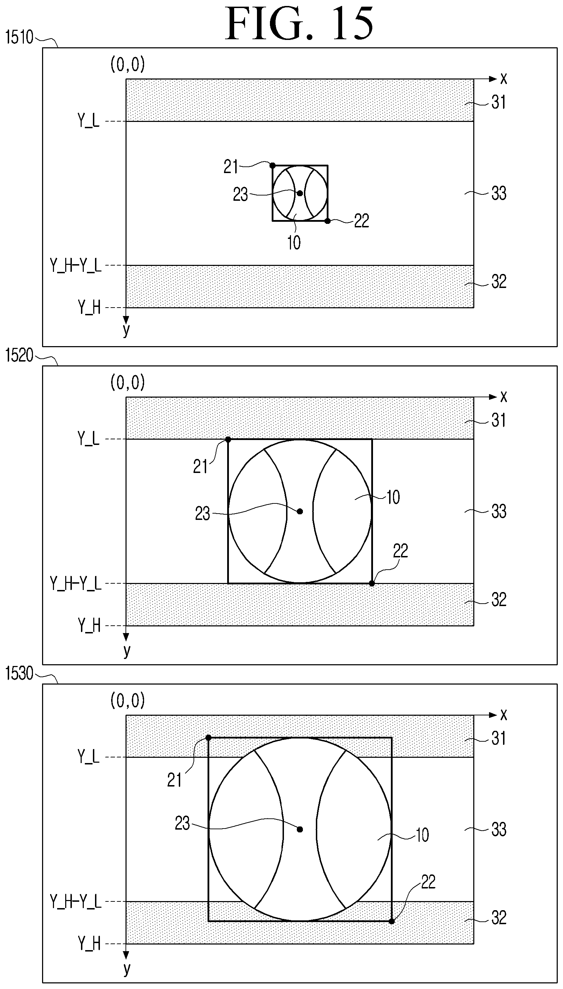

Detailed descriptions associated with the predetermined event and the 3D effect according to the predetermined event will be described with reference to FIG. 15 to FIG. 26.

An operation of identifying the predetermined event from a content without the letter box will be described with reference to FIG. 15 to FIG. 20.

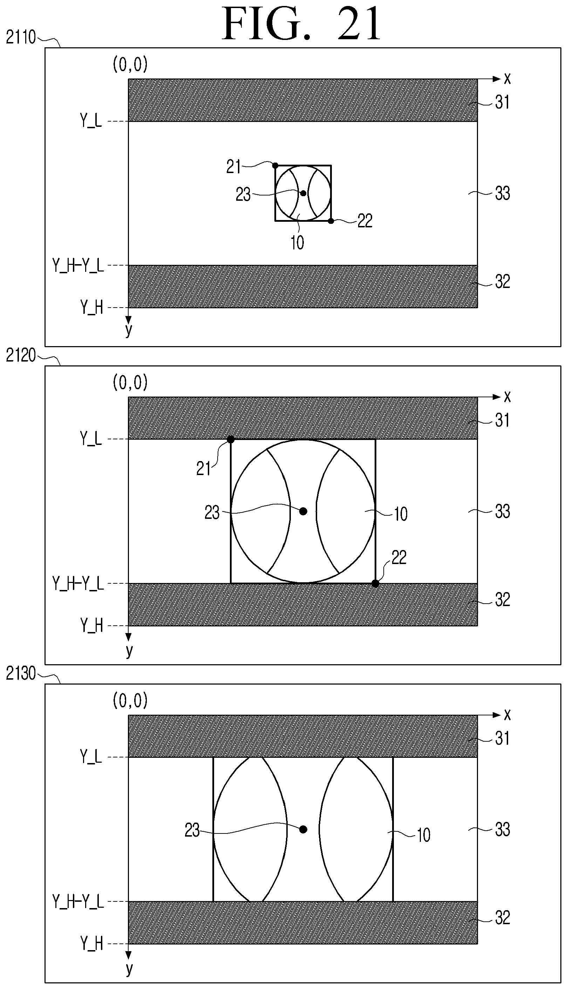

An operation of identifying the predetermined event from a content with the letter box will be described with reference to FIG. 21 to FIG. 26.

The at least one processor 120 may identify a third time-point at which the target object moves from the content area to the letter box area. The at least one processor 120 may identify a fourth time-point at which the target object which is continuously identified at the letter box area moves to the content area. The at least one processor 120 may identify from the third time-point to the fourth time-point as the target section.

The at least one processor 120 may identify a fifth time-point at which the target object moves from the letter box area to the content area. The at least one processor 120 may identify a sixth time-point which is prior to a threshold time based on the fifth time-point. The sixth time-point may be a time-point earlier than the fifth time-point. The at least one processor 120 may identify from the sixth time-point to the fifth time-point as the target section.

The at least one processor 120 may identify a seventh time-point at which the target object moves from the content area to the letter box area. The at least one processor 120 may identify an eighth time-point which is after the threshold time based on the seventh time-point. The eighth time-point may be a time-point after the seventh time-point. The at least one processor 120 may identify from the seventh time-point to the eighth time-point as the target section.

The at least one processor 120 may identify whether the letter box is included in the content, and obtain a composite image by adding the letter box to at least one of the basic layer or the 3D layer if the letter box is not included in the content.

The at least one processor 120 may obtain a 3D image corresponding to the target object to be displayed at the letter box, and obtain a 3D layer including the 3D image.

An operation of generating a composite image in a content without the letter box will be described with reference to FIG. 15 to FIG. 20.

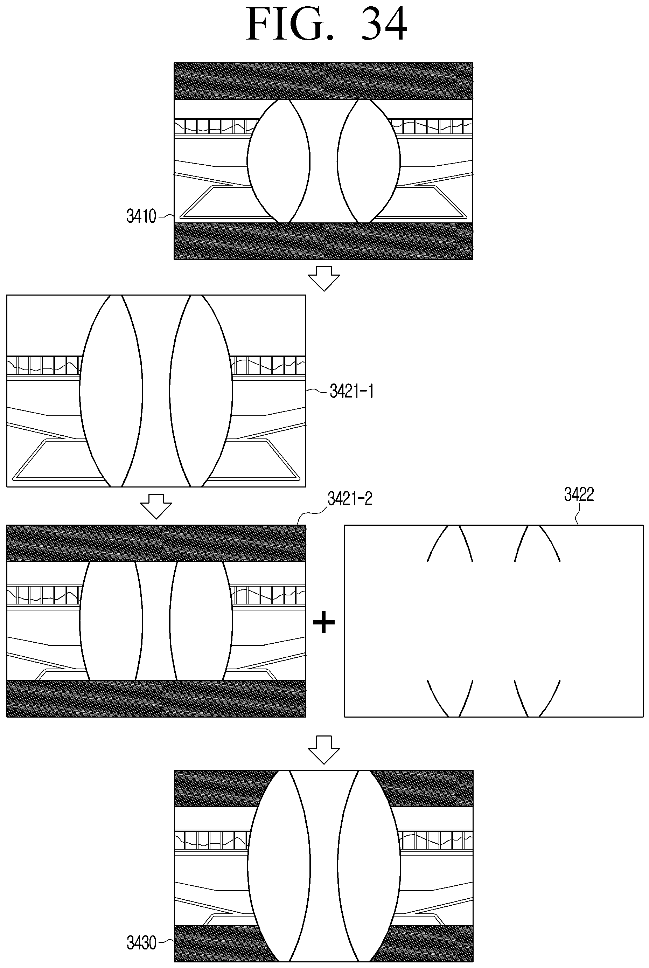

An operation of generating a composite image in a content with the letter box will be described with reference to FIG. 34 to FIG. 37.

The at least one processor 120 may determine a position of the letter box based on a position of content information included in the content, and the content information include at least one of a graphic user interface (UI) or a text UI representing the content.

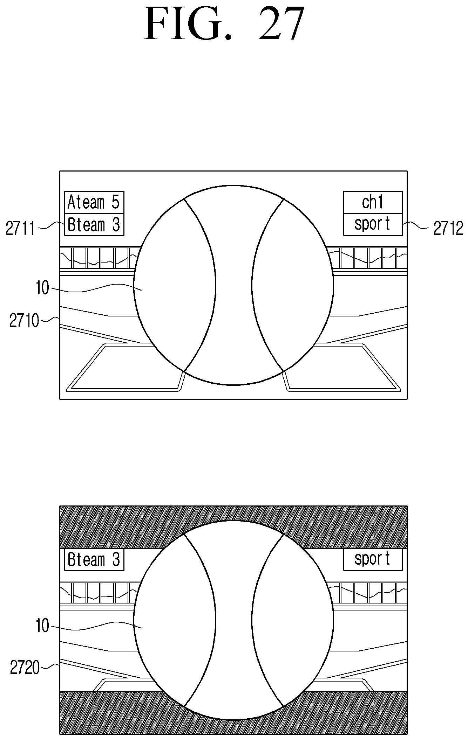

Detailed descriptions associated therewith will be described with reference to FIG. 27 to FIG. 29.

The electronic apparatus 100 may determine a length of the letter box based on a position of the target object and a position of the content information.

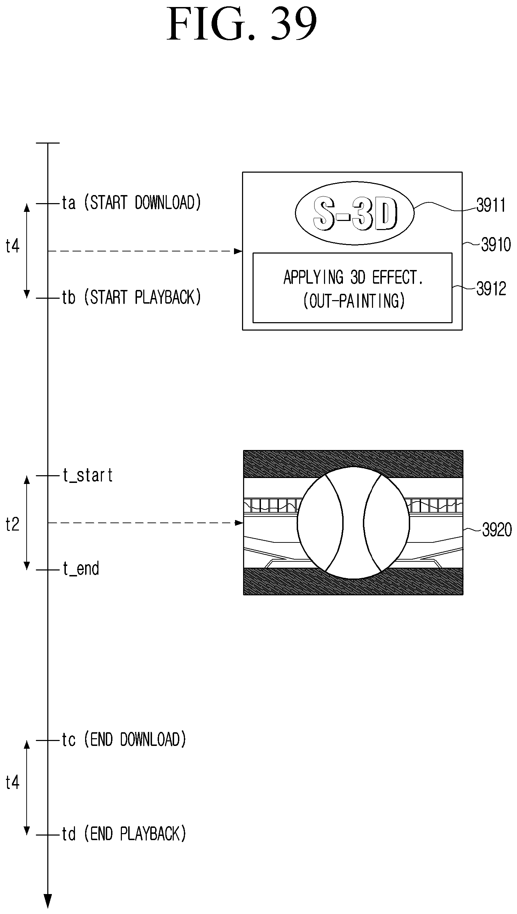

The at least one processor 120 may playback the content delaying by a threshold time to secure time necessary in generating the composite image. Descriptions associated therewith will be described with reference to FIG. 39.

According to various embodiments, a content may include one image, and the electronic apparatus 100 may apply the 3D effect to the one image.

The electronic apparatus 100 may further include a display 140. The at least one processor 120 may display the composite image in the display 140. The at least one processor 120 may control the display 140 to display the composite image.

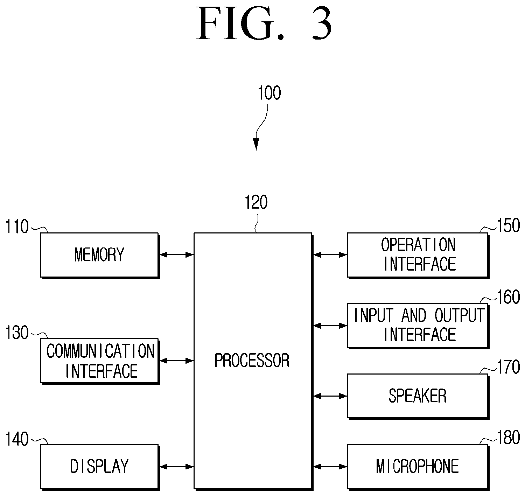

FIG. 3 is a block diagram illustrating a detailed configuration of the electronic apparatus 100 of FIG. 2.

Referring to FIG. 3, the electronic apparatus 100 may include at least one of the memory 110, the at least one processor 120, a communication interface 130, the display 140, an operation interface 150, an input and output interface 160, a speaker 170, or a microphone 180.

The (at least one) memory 110 may be implemented as an internal memory such as, for example, and without limitation, a read only memory (ROM) included in the at least one processor 120 (e.g., electrically erasable programmable read-only memory (EEPROM)), a random access memory (RAM), or the like, or implemented as a memory separate from the at least one processor 120. In this case, the memory 110 may be implemented in a form of a memory embedded in the electronic apparatus 100 according to data storage use, or implemented in a form or a memory attachable to and detachable from the electronic apparatus 100. For example, data for the driving of the electronic apparatus 100 may be stored in the memory embedded in the electronic apparatus 100, and data for an expansion function of the electronic apparatus 100 may be stored in the memory attachable to and detachable from the electronic apparatus 100.

The memory embedded in the electronic apparatus 100 may be implemented as at least one of a volatile memory (e.g., a dynamic RAM (DRAM), a static RAM (SRAM), or a synchronous dynamic RAM (SDRAM)), or a non-volatile memory (e.g., one time programmable ROM (OTPROM), programmable ROM (PROM), erasable and programmable ROM (EPROM), electrically erasable and programmable ROM (EEPROM), mask ROM, flash ROM, a flash memory (e.g., NAND flash or NOR flash), a hard disk drive (HDD) or a solid state drive (SSD)), and the memory attachable to and detachable from the electronic apparatus 100 may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., USB memory) connectable to a USB port, or the like.

The at least one processor 120 may perform the overall control operation of the electronic apparatus 100. Specifically, the at least one processor 120 may perform a function controlling the overall operation of the electronic apparatus 100.

The at least one processor 120 may be implemented as a digital signal processor (DSP) configured to process digital signals, a microprocessor, or a time controller (TCON). However, the above is not limited thereto, and may include one or more of a central processing unit (CPU), a micro controller unit (MCU), a micro processing unit (MPU), a controller, an application processor (AP), a graphics-processing unit (GPU), a communication processor (CP), or an ARM (advanced reduced instruction set computer (RISC) machines) processor, or may be defined by the corresponding term. In addition, the at least one processor 120 may be implemented as a System on Chip (SoC) or a large scale integration (LSI) embedded with a processing algorithm, or may be implemented in a form of a field programmable gate array (FPGA). In addition, the at least one processor 120 may perform various functions by executing computer executable instructions stored in the memory.

The communication interface 130 may be a configuration which performs communication with external apparatuses of various types according to communication methods of various types. The communication interface 130 may include a wireless communication module or a wired communication module. Here, each communication module may be implemented in at least one hardware chip form.

The wireless communication module may be a module which communicates with an external apparatus wirelessly. For example, the wireless communication module may include at least one of a Wi-Fi module, a Bluetooth module, an infrared communication module, or other communication modules.

The Wi-Fi module and the Bluetooth module may perform communication in a Wi-Fi method and a Bluetooth method, respectively. When using the Wi-Fi module or the Bluetooth module, various connection information such as a service set identifier (SSID) and a session key may first be transmitted and received, and after communicatively connecting using the same, various information may be transmitted and received.

The infrared communication module may perform communication according to an infrared communication (Infrared Data Association (IrDA)) technology of transmitting data wirelessly in short range by using infrared rays present between visible rays and millimeter waves.

The other communication modules may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like, in addition to the above-described communication methods.

The wired communication module may be a module for communicating with an external apparatus via wired communication. For example, the wired communication module may include at least one of a local area network (LAN) module, an Ethernet module, a pair cable, a coaxial cable, an optical fiber cable, or an ultra wide-band (UWB) module.

The display 140 may be implemented as displays of various forms such as, for example, and without limitation, a liquid crystal display (LCD), an organic light emitting diode (OLED) display, and a plasma display panel (PDP). In the display 140, a driving circuit, which may be implemented in the form of an amorphous silicon thin film transistor (a-si TFT), a low temperature poly silicon (LTPS) TFT, an organic TFT (OTFT), or the like, a backlight unit, and the like may be included. The display 140 may be implemented as a touch screen coupled with a touch sensor, a flexible display, a three-dimensional display (3D display), or the like. In addition, according to an embodiment of the disclosure, the display 140 may include not only a display panel which outputs an image, but also a bezel which houses the display panel. Specifically, according to an embodiment of the disclosure, the bezel may include a touch sensor for sensing a user interaction.

The operation interface 150 may be implemented as a button, a touch pad, a mouse, a keyboard, and the like, or implemented also as a touch screen capable of performing the above-described display function and an operation input function together therewith. Here, the button may be a button of various types such as a mechanical button, a touch pad, or a wheel which is formed at a random area at a front surface part or a side surface part, a rear surface part, or the like of an exterior of a main body of the electronic apparatus 100.

The input and output interface 160 may be any one of a high-definition multimedia interface (HDMI), a mobile high-definition link (MHL), a universal serial bus (USB), a display port (DP), a Thunderbolt, a video graphics array (VGA) port, an RGB port, a D-subminiature (D-SUB), or a digital visual interface (DVI). The input and output interface 160 may input and output at least one of an audio signal or a video signal. According to an embodiment, the input and output interface 160 may include a port which inputs and outputs only the audio signal and a port which inputs and outputs only the video signal as separate ports, or may be implemented as one port which inputs and outputs both the audio signal and the video signal. The electronic apparatus 100 may transmit at least one of the audio signal or the video signal to an external apparatus (e.g., an external display apparatus or an external speaker) through the input and output interface 160. Specifically, the output port included in the input and output interface 160 may be coupled with the external apparatus, and the electronic apparatus 100 may transmit at least one of the audio signal or the video signal to the external apparatus through the output port.

Here, the input and output interface 160 may be coupled with the communication interface. The input and output interface 160 may transmit information received from an external device to the communication interface or transmit information received through the communication interface to the external device.

The speaker 170 may be an element which outputs not only various audio data, but also various notification sounds, voice messages, or the like.

The microphone 180 may be a configuration for receiving input of a user voice or other sounds and converting to audio data. The microphone 180 may receive the user voice in an activated state. For example, the microphone 180 may be an integrated-type, integrated to an upper side, a front surface, a side surface, or the like of the electronic apparatus 100. The microphone 180 may include various configurations such as a microphone that collects the user voice in an analog form, an amplifier circuit that amplifies the collected user voice, an A/D converter circuit that samples the amplified user voice and converts to a digital signal, a filter circuit that removes noise components from the converted digital signal, and the like.

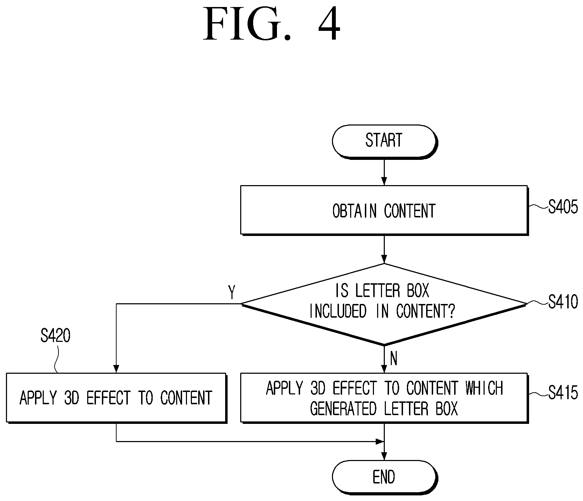

FIG. 4 is a diagram illustrating an operation of identifying whether a letter box is included in a content.

Referring to FIG. 4, the electronic apparatus 100 may obtain content (S405). The content may be stored in a memory of the electronic apparatus 100. The electronic apparatus 100 may receive content from the external apparatus. The electronic apparatus 100 may receive content from the external apparatus in real-time. A method of receiving content in real-time may be a streaming method. The electronic apparatus 100 may receive content from an external apparatus or an external server in real-time.

The electronic apparatus 100 may determine whether the letter box is included in the content (S405). The letter box may mean a blank area which is displayed in a darkish color displayed on at least one of an upper side or a lower side of the content.

If the letter box is not included in the content (S410-N), the electronic apparatus 100 may apply the 3D effect to the content which generated the letter box (S415). For embodiments in which the letter box is not included, the above will be described with reference to FIG. 15 to FIG. 20, and FIG. 30 to FIG. 33.

If the letter box is included in the content (S410-Y), the electronic apparatus 100 may apply the 3D effect to the content (S420).

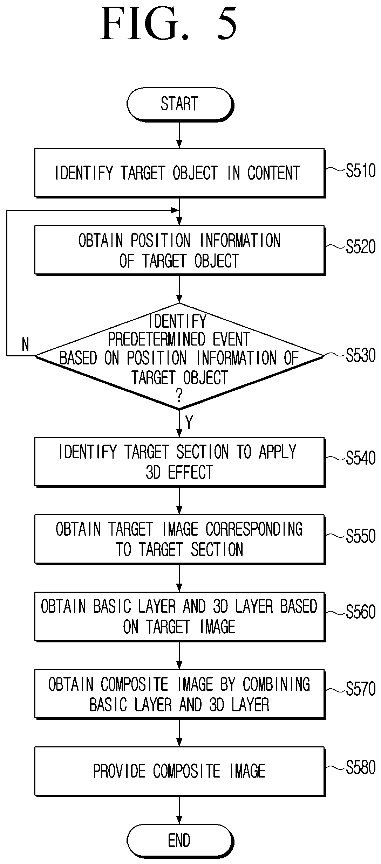

FIG. 5 is a diagram illustrating an operation of providing a composite image. Embodiments in which the letter box is included will be described with reference to FIG. 21 to FIG. 26, and FIG. 34 to FIG. 37.

Referring to FIG. 5, the electronic apparatus 100 may identify a target object from the content (S510).

According to an embodiment, the target object may be a predetermined object. The predetermined object may be changed by the user setting. The predetermined object may be a movable object. For example, the predetermined object may be a ball, an animal, a person, a face, an automobile, a plane, a bullet, or the like.

According to an embodiment, the target object may be an object which is determined according to content. The electronic apparatus 100 may determine an object for applying the 3D effect as the target object based on at least one image (or image frame) included in the content.

The electronic apparatus 100 may obtain position information of the target object (S520).

The electronic apparatus 100 may obtain movement information (direction information, speed information) based on position information. The electronic apparatus 100 may obtain direction information based on position information. The electronic apparatus 100 may obtain speed information based on position information.

The electronic apparatus 100 may determine whether a predetermined event has been identified based on the position information of the target object (S530).

If the predetermined event is not identified (S530-N), the electronic apparatus 100 may repeatedly obtain the position information of the target object in real-time.

If the predetermined event is identified (S530-Y), the electronic apparatus 100 may identify a target section to apply the 3D effect (S540).

The electronic apparatus 100 may obtain a target image corresponding to the target section (S550).

The electronic apparatus 100 may obtain a basic layer and a 3D layer based on the target image (S560).

The electronic apparatus 100 may obtain a composite image by combining the basic layer and the 3D layer (S570).

The electronic apparatus 100 may provide the composite image (S580). The electronic apparatus 100 may provide content including the composite image.

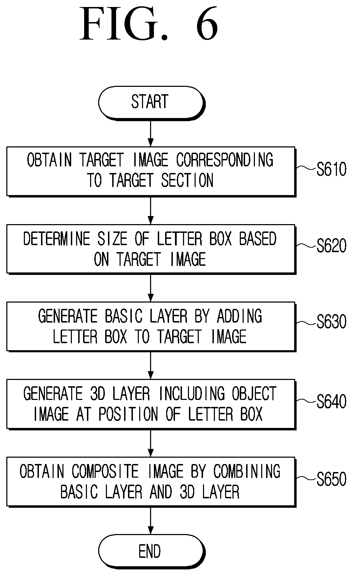

FIG. 6 is a diagram illustrating an operation of applying a 3D effect to a content without a letter box.

Referring to FIG. 6, the electronic apparatus 100 may obtain the target image corresponding to the target section (S610).

The electronic apparatus 100 may determine a size of the letter box based on the target image (S620).

The size may include at least one of a horizontal length or a vertical length.

According to an embodiment, the size of the letter box may be a predetermined size.

According to an embodiment, the size of the letter box may be determined based on a resolution of content. The electronic apparatus 100 may store a mapping table which includes the size of the letter box corresponding to a plurality of resolutions, respectively. The electronic apparatus 100 may obtain the received resolution of content. The electronic apparatus 100 may obtain the size of the letter box corresponding to (mapped according to) the resolution of content based on the mapping table.

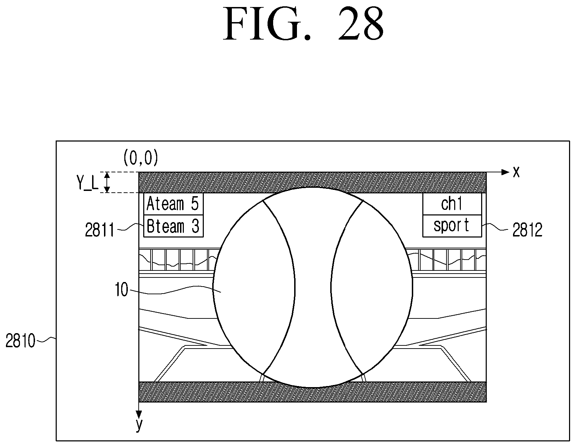

According to an embodiment, the size of the letter box may be determined according to the position of content information. An embodiment associated therewith will be described with reference to FIG. 28.

The electronic apparatus 100 may generate the basic layer by adding the letter box to the target image (S630).

The electronic apparatus 100 may generate the 3D layer including an object image at the position of the letter box (S640).

The electronic apparatus 100 may obtain a composite image by combining the basic layer and the 3D layer (S650).

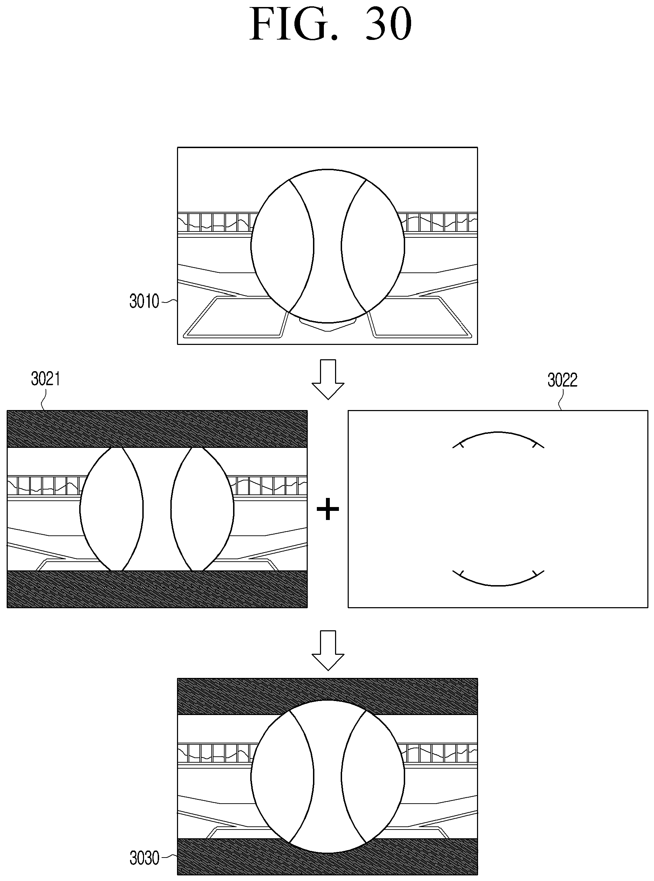

An embodiment in which a composite image is generated from content in which the letter box is not included will be described with reference to FIG. 30 to FIG. 33.

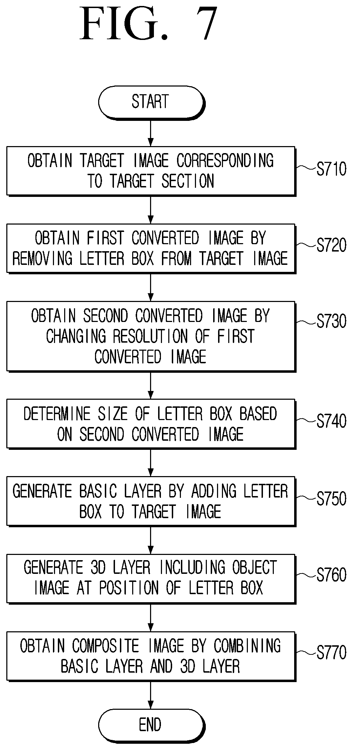

FIG. 7 is a diagram illustrating an operation of applying a 3D effect to a content with a letter box.

Referring to FIG. 7, the electronic apparatus 100 may obtain a target object corresponding to the target section (S710).

The electronic apparatus 100 may obtain a first converted image by removing the letter box from the target image (S720).

The electronic apparatus 100 may obtain a second converted image by changing a resolution of the first converted image (S730).

The electronic apparatus 100 may determine the size of the letter box based on the second converted image (S740).

The electronic apparatus 100 may generate a basic layer by adding the letter box to the target image (S750).

The electronic apparatus 100 may generate a 3D layer including the object image at the position of the letter box (S760).

The electronic apparatus 100 may obtain a composite image by combining the basic layer and the 3D layer.

An embodiment in which a composite image is generated from content in which the letter box is included will be described with reference to FIG. 34 to FIG. 37.

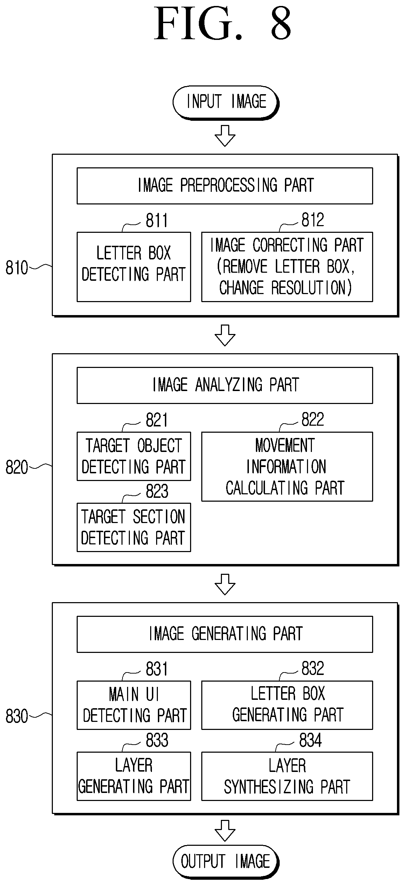

FIG. 8 is a diagram illustrating an operation of applying a 3D effect to an image.

Referring to FIG. 8, the electronic apparatus 100 may identify a target section applied with the 3D effect in the content. The electronic apparatus 100 may obtain a target image corresponding to the target section. The electronic apparatus 100 may perform a function of applying the 3D effect by using the target image as an input image (or input data).

The electronic apparatus 100 may include at least one of an image preprocessing part 810, an image analyzing part 820, or an image generating part 830.

The image preprocessing part 810 may include at least one of a letter box detecting part 811 or an image correcting part 812.

The image preprocessing part 810 may analyze and convert an image prior to applying the 3D effect to the input image.

The letter box detecting part 811 may be a module for determining whether the letter box is included in the content.

If the input image is input to the image preprocessing part 810, the electronic apparatus 100 may proceed with detecting the letter box in the letter box detecting part 811. The letter box detecting part 811 may identify whether the letter box is included in the content. The letter box detecting part 811 may obtain size information of the letter box. The size information may include the vertical length of the letter box. If the letter box is not included in the content, the input image may be transmitted to the image analyzing part 820 without a preprocessing operation.

The image correcting part 812 may be a module which performs at least one of an operation of removing the letter box included in the content or an operation of changing the resolution.

If the letter box is present, the image correcting part 812 may perform a removal of the letter box and image resizing (changing of resolution).

The image correcting part 812 may remove the letter box and perform resizing of the image to fit a horizontal and vertical ratio of an original image. Because distortion may occur compared to the original image when resizing, a method of resizing by cropping the left and right areas (on a horizontal basis) of the image according to the removed letter box ratio may be applied.

According to various embodiments, even if the letter box is present, the letter box may be maintained without removing the same.

According to various embodiments, even if the letter box is present, the resolution may not be changed.

The image analyzing part 820 may include at least one of a target object detecting part 821, a movement information calculating part 822, or a target section detecting part 823.

The image analyzing part 820 may analyze an image applied with the 3D effect by analyzing the input image.

The target object detecting part 821 may determine whether a target object is included in the input image. The target object detecting part 821 may determine the target object.

The target object may be an object which attracts an attention of a viewer. The target object detecting part 821 may utilize saliency information within an image. Saliency may be a term representing a degree to which attention is attracted in an image, and there is a likelihood of attracting the attention of a person being high as saliency becomes higher. Saliency information may be described as degree of interest information or interest feature information.

The greater there is a color difference with adjacent pixels, the more the position nears a center of a screen, and the higher the feature values such as texture (information such as edge and detail) are, the saliency may be more higher.

The target object detecting part 821 may detect candidate pixels of an object by grouping pixels with high saliency. The target object detecting part 821 may perform clustering on a form of an object by utilizing a color of surrounding pixels, brightness, edge, texture components, and the like based on a group of pixels with high saliency.

The target object detecting part 821 may use a set of clustered pixels as object information. The target object detecting part 821 may obtain information on whether the corresponding form is maintained over several frames taking into consideration continuity of pixel information (saliency, color, brightness, edge, texture information, etc.) between adjacent frames. The target object detecting part 821 may identify the target object based on the obtained various information.

The target object may be an object with depth information being close to a screen compared to its surrounding in the image.

The target object detecting part 821 may use depth information of the input image. If there is no depth information in the content, the target object detecting part 821 may use a technology of obtaining 3D depth information based on 2D RGB image information.

The target object detecting part 821 may obtain depth information per pixel by using a technique through deep-learning such as a 'single image depth estimation.'

The target object detecting part 821 may identify the target object by combining saliency information and depth information.

The target object detecting part 821 may determine the target object through determining conditions such as whether a depth value of the corresponding object is less than a specific threshold value, whether a depth value of an object becomes gradually smaller (becomes gradually closer to the screen) with respect to the continued frame information, or the like.

The target object detecting part 821 may obtain a bounding box (objectBoundBox) of a minimum size which includes a set of pixel coordinates (object pixel) that form an object and an object and a center coordinate of the object (objectCenter) with respect to a number (N) of object candidates in a frame unit of an image and the respective candidates.

The target object detecting part 821 may perform filtering on a number of object candidates desired by a user and sizes, positions, and the like of the respective objects through adjusting a pre-defined threshold value.

In one or more examples, the target object detecting part 821 may identify the target object taking into consideration whether a size (length or area) of an object is greater than or equal to the threshold value.

The movement information calculating part 822 may obtain (or calculate) movement information of the target object. The movement information may include at least one of direction information or speed information. An operation of obtaining movement information may be described with reference to FIG. 9 to FIG. 14. The movement information may be obtained based on the position information.

Based on various expression, the movement information may include at least one of the position information, the direction information, or the speed information.

The target section detecting part 823 may identify an image to apply the 3D effect from at least one image included in the content. For example, a time section applied with the 3D effect may be identified from an hour of content. The electronic apparatus 100 may determine the target section based on whether a predetermined event is identified. A detailed description on the predetermined event will be described with reference to FIG. 15 to FIG. 26.

In one or more examples, the target section detecting part 823 may identify the target section taking into consideration whether a moving speed of an object is greater than or equal to the threshold value. The target section detecting part 823 may identify the target section based on an object, the moving speed of which being greater than a first threshold value and less than or equal to a second threshold value. If the moving speed is less than or equal to the first threshold value or greater than the second threshold value, the target section detecting part 823 may determine as not being the target section.

The image generating part 830 may include at least one of a main user interface (UI) detecting part 831, a letter box generating part 832, a layer generating part 833, or a layer synthesizing part 834.

The image generating part 830 may generate (or obtain) a composite image applied with the 3D effect.

The main user interface(UI) detecting part 831 may identify a UI which includes content information included in the input image (or preprocessed image). The content information may include information associated with a content name, and a channel providing the content. The information associated with the channel may include a channel name, a channel number, and a channel logo.

The letter box generating part 832 may determine the size and position of the letter box based on the input image (or preprocessed image).

The letter box generating part 832 may determine a size of a letter box to be inserted based on the movement information of the object.

The letter box generating part 832 may determine the size of the letter box to be inserted at the target section.

The letter box generating part 832 may gradually increase the size of the letter box such that the size of the letter box prior to target section gradually increases from 0 so as to be a maximum size of the letter box at a start of an effect section.

The letter box generating part 832 may control for the letter box to slowly disappear after the target section.

The letter box generating part 832 may determine a maximum size to which the letter box is to be generated to a point corresponding graphics are not covered through the content information when deciding on the maximum size of the letter box.

The layer generating part 833 may generate at least one of the basic layer or the 3D layer based on the input image (or preprocessed image).

The layer synthesizing part 834 may obtain a composite image by combining the basic layer and the 3D layer.

The layer synthesizing part 834 may apply a blurring filter to an object border part and prevent it from appearing unnaturally. The electronic apparatus 100 may obtain a composite image as an output image.

FIG. 9 is a diagram illustrating an operation of identifying a target object.

Referring to embodiment 910 in FIG. 9, a target object 10 may be included in a content. The electronic apparatus 100 may identify the target object 10. The electronic apparatus 100 may identify (or determine) the bounding box 20 based on the target object 10. The electronic apparatus 100 may obtain position information of the target object 10 based on the bounding box 20 of the target object 10.

Referring to embodiment 920 in FIG. 9, the electronic apparatus 100 may obtain position information showing a position of the target object 10.

The electronic apparatus 100 may obtain the bounding box 20 of the target object 10. The bounding box 20 may be at least one set of bounding points.

The electronic apparatus 100 may determine the position information of the target object 10 based on position information of the bounding box 20. The position information of the bounding box 20 may include respective positions of a plurality of bounding points showing the bounding box 20.

The electronic apparatus 100 may obtain the position information of the target object 10 in various methods based on the position information of the bounding box 20.

According to an embodiment, the electronic apparatus 100 may obtain a minimum coordinate value 21 of the target object 10. The minimum coordinate value 21 may include a minimum value of x-coordinates and a minimum value of y-coordinates of the bounding box 20.

According to an embodiment, the electronic apparatus 100 may obtain a maximum coordinate value 22 of the target object 10. The maximum coordinate value 22 may include a maximum value of x-coordinates and a maximum value of y-coordinates of the bounding box 20.

According to an embodiment, the electronic apparatus 100 may obtain an average coordinate value 23 of the target object 10. The average coordinate value 23 may include an average value of x-coordinates and an average value of y-coordinates of the bounding box 20. The average coordinate value 23 may include an average value of the minimum coordinate value 21 and the maximum coordinate value 22.

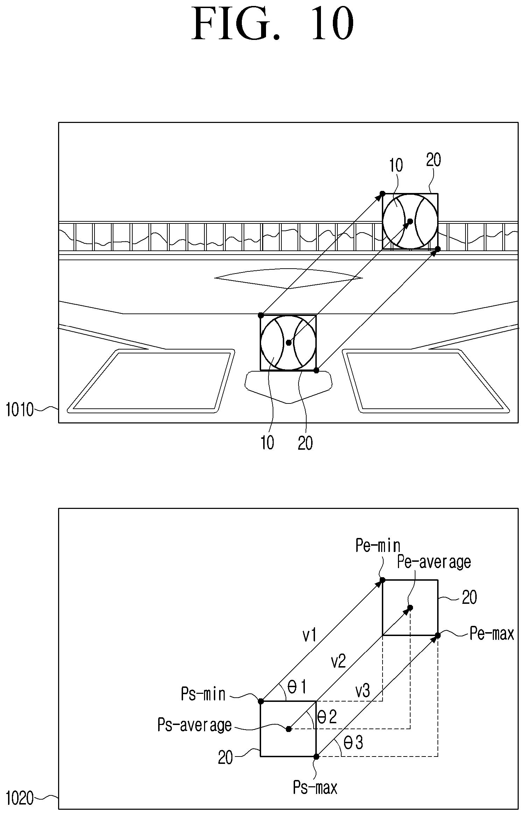

FIG. 10 is a diagram illustrating an operation of objecting movement information of a target object.

Referring to embodiment 1010 in FIG. 10, the target object 10 may move according to time. Embodiment 1010 may not be representing an image (or a frame) at a specific time-point. Embodiment 1010 shows a moving process of the target object 10 and the bounding box 20 in one image. In fact, one image (frame) may include only one target object 10.

Referring to embodiment 1020 in FIG. 10, the electronic apparatus 100 may obtain first position information based on the bounding box 20 at the first time-point. The first position information may include at least one of a minimum coordinate value (Ps-min), a maximum coordinate value (Ps-max), or an average coordinate value (Ps-average). Ps may mean a point at which the object starts to move in an analysis section.

The electronic apparatus 100 may obtain second position information based on the bounding box 20 at the second time-point. The second position information may include at least one of a minimum coordinate value (Pe-min), a maximum coordinate value (Pe-max), or an average coordinate value (Pe-average). Pe may mean a point (or a point of the object at a current time-point) at which movement in the analysis section is ended.

The electronic apparatus 100 may obtain (or calculate) movement information of the target object 10 based on position information at the first time-point and position information at the second time-point. The electronic apparatus 100 may obtain at least one of moving directions θ1, θ2, and θ3 or moving speeds v1, v2, and v3 of the target object 10.

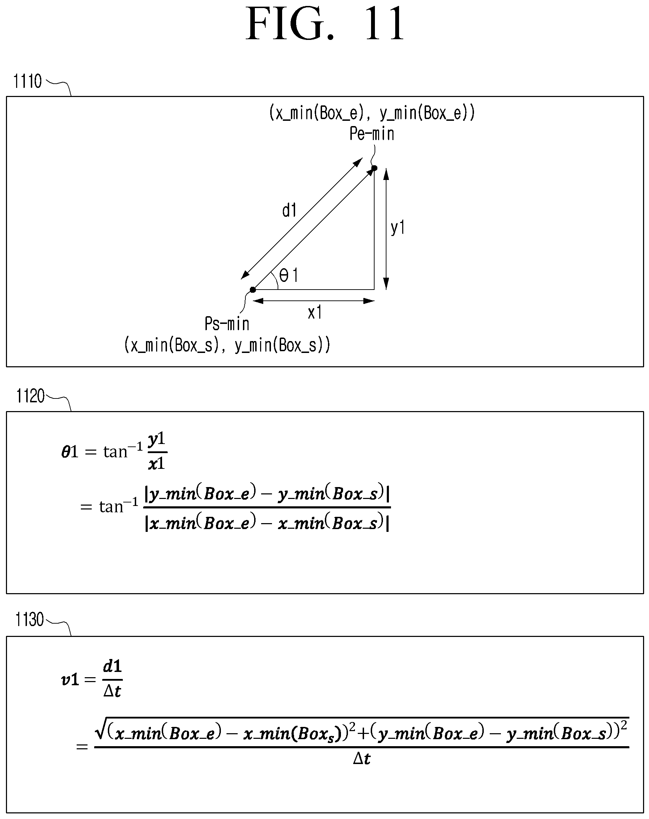

FIG. 11 is a diagram illustrating an operation of obtaining movement information of a target object according to an embodiment.

Referring to FIG. 11, the electronic apparatus 100 may obtain movement information of the target object 10 based on a minimum coordinate value.

Referring to embodiment 1110 in FIG. 11, the electronic apparatus 100 may obtain the minimum coordinate value (Ps-min) at the first time-point and the minimum coordinate value (Pe-min) at the second time-point.

The electronic apparatus 100 may obtain position information (Box_s) of the bounding box 20 at the first time-point.

The electronic apparatus 100 may obtain a minimum value (x_min(Box_s)) of x-coordinates and a minimum value (y_min(Box_s)) of y-coordinates from the position information (Box_s) of the bounding box 20 at the first time-point.

The electronic apparatus 100 may obtain the minimum coordinate value (Ps-min) which includes the minimum value (x_min(Box_s)) of x-coordinates and the minimum value (y_min(Box_s)) of y-coordinates at the first time-point.

The electronic apparatus 100 may obtain position information (Box_e) of the bounding box 20 at the second time-point.

The electronic apparatus 100 may obtain a minimum value (x_min(Box_e)) of x-coordinates and a minimum value (y_min(Box_e)) of y-coordinates from the position information (Box_e) of the bounding box 20 at the second time-point.

The electronic apparatus 100 may obtain the minimum coordinate value (Pe-min) which includes the minimum value (x_min(Box_e)) of x-coordinates and the minimum value (y_min(Box_e)) of y-coordinates at the second time-point.

Referring to embodiment 1120 in FIG. 11, the electronic apparatus 100 may obtain a moving direction of the target object 10. The electronic apparatus 100 may obtain a moving direction θ1 by using a first distance x1, a second distance y1, and a function tan^-1(). The moving direction may be described in angles.

The first distance x1 may be an absolute value obtained by subtracting the minimum value (x_min(Box_s)) of x-coordinates at the first time-point from the minimum value (x_min(Box_e)) of x-coordinates at the second time-point.

The second distance y1 may be an absolute value obtained by subtracting the minimum value (y_min(Box_s)) of y-coordinates at the first time-point from the minimum value (y_min(Box_e)) of y-coordinates at the second time-point.

Referring to embodiment 1130 in FIG. 11, the electronic apparatus 100 may obtain a moving speed v1 by using a moving distance d1 and a time section Δt.

The moving distance d1 may be a square root of a value obtained by adding a square of the first distance x1 and a square of the second distance y1.

The time section △t may be a difference between the first time-point and the second time-point.

The electronic apparatus 100 may obtain the moving speed v1 by dividing the moving distance d1 into time sections △t.

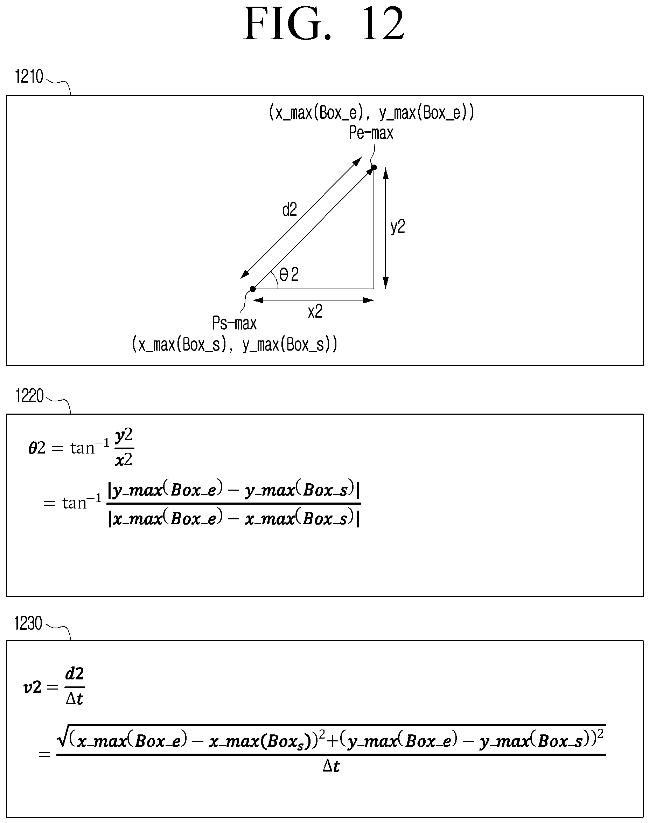

FIG. 12 is a diagram illustrating an operation of objecting movement information of a target object according to an embodiment.

Referring to FIG. 12, the electronic apparatus 100 may obtain the movement information of the target object 10 based on the maximum coordinate value.

Referring to embodiment 1210 in FIG. 12, the electronic apparatus 100 may obtain the maximum coordinate value (Ps-max) at the first time-point and the maximum coordinate value (Pe-max) at the second time-point.

The electronic apparatus 100 may obtain the position information (Box_s) of the bounding box 20 at the first time-point.

The electronic apparatus 100 may obtain a maximum value (x_max(Box_s)) of x-coordinates and a maximum value (y_max(Box_s)) of y-coordinates from the position information (Box_s) of the bounding box 20 at the first time-point.

The electronic apparatus 100 may obtain the maximum coordinate value (Ps-max) which includes the maximum value (x_max(Box_s)) of x-coordinates and the maximum value (y_max(Box_s)) of y-coordinates at the first time-point.

The electronic apparatus 100 may obtain the position information (Box_e) of the bounding box 20 at the second time-point.

The electronic apparatus 100 may obtain a maximum value (x_max(Box_e)) of x-coordinates and a maximum value (y _max(Box_e)) of y-coordinates from the position information (Box_e) of the bounding box 20 at the second time-point.

The electronic apparatus 100 may obtain the maximum coordinate value (Pe-max) which includes the maximum value (x_max(Box_e)) of x-coordinates and the maximum value (y_max(Box_e)) of y-coordinates at the second time-point.

Referring to embodiment 1220 in FIG. 12, the electronic apparatus 100 may obtain a moving direction of the target object 10. The electronic apparatus 100 may obtain a moving direction θ2 by using a first distance x2, a second distance y2, and the function tan^-1(). The moving direction may be described in angles.

The first distance x2 may be an absolute value obtained by subtracting the maximum value (x_max(Box_s)) of x-coordinates at the first time-point from the maximum value (x_max(Box_e)) of x-coordinates at the second time-point.

The second distance y2 may be an absolute value obtained by subtracting the maximum value (y _max(Box_s)) of y-coordinates at the first time-point from the maximum value (y_max(Box_e)) of y-coordinates at the second time-point.

Referring to embodiment 1230 in FIG. 12, the electronic apparatus 100 may obtain a moving speed v2 by using a moving distance d2 and the time section △t.

The moving distance d2 may be a square root of a value obtained by adding a square of the first distance x2 and a square of the second distance y2.

The time section △t may be a difference between the first time-point and the second time-point.

The electronic apparatus 100 may obtain the moving speed v2 by dividing the moving distance d2 into time sections △t.

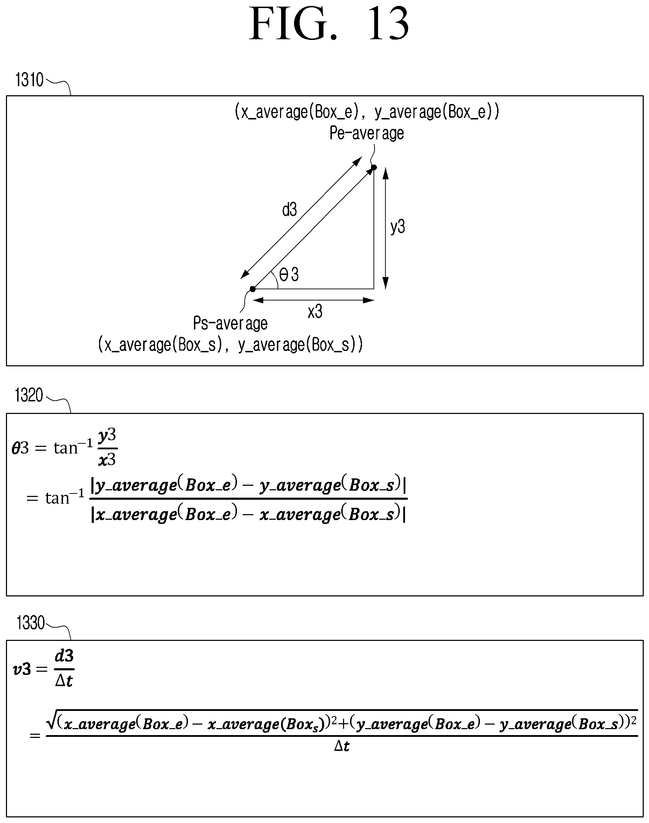

FIG. 13 is a diagram illustrating an operation of obtaining movement information of a target object according to an embodiment.

Referring to FIG. 13, the electronic apparatus 100 may obtain the movement information of the target object 10 based on the average coordinate value.

Referring to embodiment 1310 in FIG. 13, the electronic apparatus 100 may obtain the average coordinate value (Ps-average) at the first time-point and the average coordinate value (Pe-average) at the second time-point.

The electronic apparatus 100 may obtain the position information (Box_s) of the bounding box 20 at the first time-point.

The electronic apparatus 100 may obtain an average value (x_average(Box_s)) of x-coordinates and an average value (y_average(Box_s)) of y-coordinates from the position information (Box_s) of the bounding box 20 at the first time-point.

The electronic apparatus 100 may obtain the average coordinate value (Ps-average) which includes the average value (x_average(Box_s)) of x-coordinates and the average value (y_average(Box_s)) of y-coordinates at the first time point.

The electronic apparatus 100 may obtain the position information (Box_e) of the bounding box 20 at the second time-point.

The electronic apparatus 100 may obtain an average value (x_average(Box_e)) of x-coordinates and an average value (y_average(Box_e)) of y-coordinates from the position information (Box_e) of the bounding box 20 at the second time-point.

The electronic apparatus 100 may obtain the average coordinate value (Pe-average) which includes the average value (x_average(Box_e)) of x-coordinates and the average value (y_average(Box_e)) of y-coordinates at the second time-point.

Referring to embodiment 1320 in FIG. 13, the electronic apparatus 100 may obtain a moving direction of the target object 10. The electronic apparatus 100 may obtain a moving direction θ3 by using a first distance x3, a second distance y3, and the function tan^-1(). The moving direction may be described in angles.

The first distance x3 may be an absolute value obtained by subtracting the average value (x_average(Box_s)) of x-coordinates at the first time-point from the average value (x_average(Box_e)) of x-coordinates at the second time-point.

The second distance y3 may be an absolute value obtained by subtracting the average value (y_average(Box_s)) of y-coordinates at the first time-point from the average value (y_average(Box_e)) of y-coordinates at the second time-point.

Referring to embodiment 1330 in FIG. 13, the electronic apparatus 100 may obtain a moving speed v3 by using a moving distance d3 and the time section △t.

The moving distance d3 may be a square root of a value obtained by adding a square of the first distance x3 and a square of the second distance y3.

The time section △t may be a difference between the first time-point and the second time-point.

The electronic apparatus 100 may obtain the moving speed v3 by dividing the moving distance d3 into time sections △t.

FIG. 14 is a diagram illustrating a letter box area and a content area.

Referring to embodiment 1410 in FIG. 14, the electronic apparatus 100 may distinguish a whole area included in a content into letter box areas 31 and 32 and a content area 33 to identify a predetermined event.

If there are two letter box areas, the letter box disposed at an upper side is described as the first letter box area 31, and the letter box disposed at a lower side is described as the second letter box area 32.

If there is no letter box included in the content, the electronic apparatus 100 may arbitrarily distinguish the letter box area and the content area. For example, the electronic apparatus 100 may distinguish the whole area into the letter box area and the content area based on the letter box of the predetermined size.

If the letter box is included in the content, the electronic apparatus 100 may identify the letter box area and the content area included in the content.

Coordinates for representing an area may be such that a left upper end is an original point (0,0). An x coordinate value may be increased from the original point toward an x-axis direction. A y coordinate value may be increased from the original point toward a y-axis direction.

A vertical length of a whole area of content may be Y_H.

A vertical length of the letter box area may be Y_L. If there are two letter boxes present, the vertical lengths of the respective letter box areas 31 and 32 may be the same.

A vertical length of the content area may be Y_H-2(Y_L). The vertical length of the content area may be a value (Y_H-2(Y_L)) obtained by subtracting a sum (2(Y_L)) of the vertical lengths of the two letter boxes from the vertical length (Y_H) of the whole area.

If a y coordinate value of the target object 10 exceeds 0 and is less than or equal to Y_L, the electronic apparatus 100 may identify as the target object 10 being present at the first letter box area 31.

If the y coordinate value of the target object 10 exceeds Y_L and is less than or equal to Y_H-Y_L, the electronic apparatus 100 may identify as the target object 10 being present at the content area 33.

If the y coordinate value of the target object 10 exceeds Y_H-Y_L and is less than or equal to Y_H, the electronic apparatus 100 may identify as the target object 10 being present at the second letter box area 32.

FIG. 15 is a diagram illustrating a predetermined event of a target object according to an embodiment.

Referring to embodiment 1510 in FIG. 15, the electronic apparatus 100 may identify the target object 10 from the content area 33.

If the minimum coordinate value 21 and the maximum coordinate value 22 are present at the content area 33, the electronic apparatus 100 may identify as the target object 10 being present at the content area 33.

If the minimum coordinate value 21, the maximum coordinate value 22, and the average coordinate value 23 are present at the content area 33, the electronic apparatus 100 may identify as the target object 10 being present at the content area 33.

In one or more examples, if a y coordinate value of the minimum coordinate value 21 exceeds Y_L and is less than or equal to Y_H-Y_L, and a y coordinate value of the maximum coordinate value 22 exceeds Y_L and is less than or equal to Y_H-Y_L, the electronic apparatus 100 may identify as the target object 10 being present at the content area 33.

Referring to embodiment 1520 in FIG. 15, the electronic apparatus 100 may identify the target object 10 from at least one of a border line (y=Y_L) between the first letter box area 31 and the content area 33 or a border line (y=Y_H-Y_L) between the second letter box area 32 and the content area 33.

In one or more examples, if the y coordinate value of the minimum coordinate value 21 is Y_L, the electronic apparatus 100 may identify that the target object 10 is in contact with the border line (y=Y_L) between the first letter box area 31 and the content area 33.

In one or more examples, if the y coordinate value of the maximum coordinate value 22 is less than or equal to Y_H-Y_L, the electronic apparatus 100 may identify that the target object 10 is in contact with the border line (y=Y_H-Y_L) between the second letter box area 32 and the content area 33.

Referring to embodiment 1530 in FIG. 15, the electronic apparatus 100 may identify the target object 10 from at least one of the first letter box area 31 or the second letter box area 32.

In one or more examples, if the y coordinate value of the minimum coordinate value 21 exceeds 0 and is less than or equal to Y_L, the electronic apparatus 100 may identify that at least a portion of the target object 10 is present at the first letter box area 31.

In one or more examples, if the y coordinate value of the maximum coordinate value 22 exceeds Y_H-Y_L and is less than or equal to Y_H, the electronic apparatus 100 may identify that at least a portion of the target object 10 is present at the second letter box area 32.

In one or more examples, if the y coordinate value of the minimum coordinate value 21 exceeds 0 and is less than or equal to Y_L, and the y coordinate value of the maximum coordinate value 22 exceeds Y_H-Y_L and is less than or equal to Y_H, the electronic apparatus 100 may identify that the target object 10 is present at the first letter box area 31, the second letter box area 32, and the content area 33.

The predetermined event may be an event in which the minimum coordinate value 21 is positioned at the content area 33 and then positioned at the first letter box area 31 or the second letter box area 32.

The predetermined event may be an event in which the maximum coordinate value 22 is positioned at the content area 33 and then positioned at the first letter box area 31 or the second letter box area 32.

The predetermined event may be an event in which the minimum coordinate value 21 is positioned at the content area 33 and then positioned at the first letter box area 31, and the maximum coordinate value 22 is positioned at the content area 33 and then positioned at the second letter box area 32.

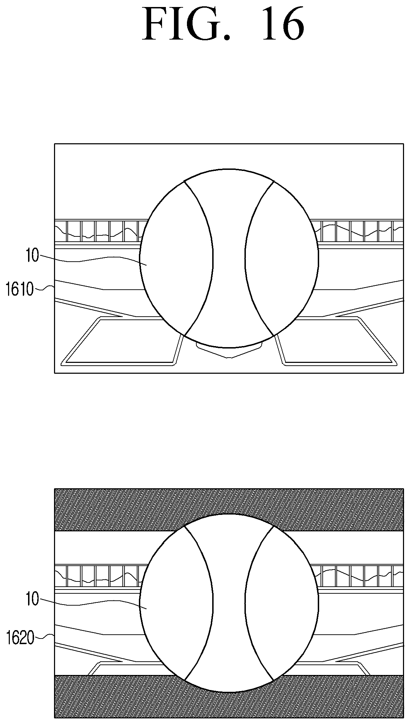

FIG. 16 is a diagram illustrating a composite image applied with a 3D effect according to an embodiment.

Referring to FIG. 16, the electronic apparatus 100 may obtain an input image 1610. The electronic apparatus 100 may obtain a composite image 1620 by applying the 3D effect to the input image 1610.

If an event occurs in which embodiments 1510, 1520, and 1530 in FIG. 15 are identified in order, the electronic apparatus 100 may generate the composite image 1620.

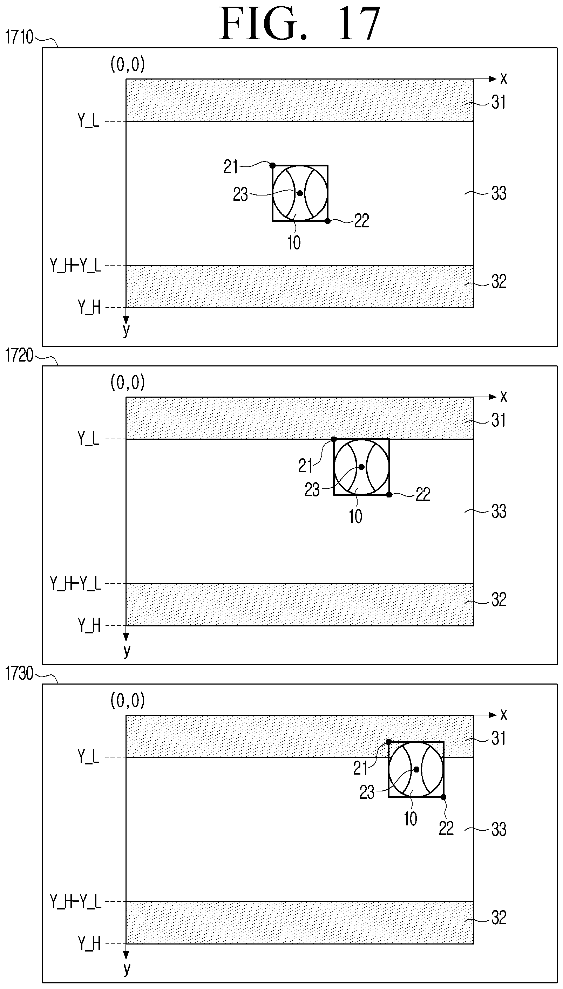

FIG. 17 is a diagram illustrating a predetermined event of a target object according to an embodiment.

Referring to embodiment 1710 in FIG. 17, the electronic apparatus 100 may identify the target object 10 from the content area 33.

In one or more examples, if the y coordinate value of the minimum coordinate value 21 exceeds Y_L and is less than or equal to Y_H-Y_L, and the y coordinate value of the maximum coordinate value 22 exceeds Y_L and is less than or equal to Y_H-Y_L, the electronic apparatus 100 may identify that the target object 10 is present at the content area 33.

Referring to embodiment 1720 in FIG. 17, the electronic apparatus 100 may identify that the target object 10 is in contact with the border line (y=Y_L) between the first letter box area 31 and the content area 33.

In one or more examples, if the y coordinate value of the minimum coordinate value 21 is Y_L, and the y coordinate value of the maximum coordinate value 22 exceeds Y_L and is less than or equal to Y_H-Y_L, the electronic apparatus 100 may identify that the target object 10 is in contact with the border line (y=Y_L) between the first letter box area 31 and the content area 33.

Referring to embodiment 1730 in FIG. 17, the electronic apparatus 100 may identify as at least a portion of the target object 10 being present at the first letter box area 31.

In one or more examples, if the y coordinate value of the minimum coordinate value 21 exceeds 0 and is less than or equal to Y_L, and the y coordinate value of the maximum coordinate value 22 exceeds Y_L and is less than or equal to Y_H-Y_L, the electronic apparatus 100 may identify that at least a portion of the target object 10 is present at the first letter box area 31.

The predetermined event may be an event in which the minimum coordinate value 21 is positioned at the content area 33 and then positioned at the first letter box area 31.

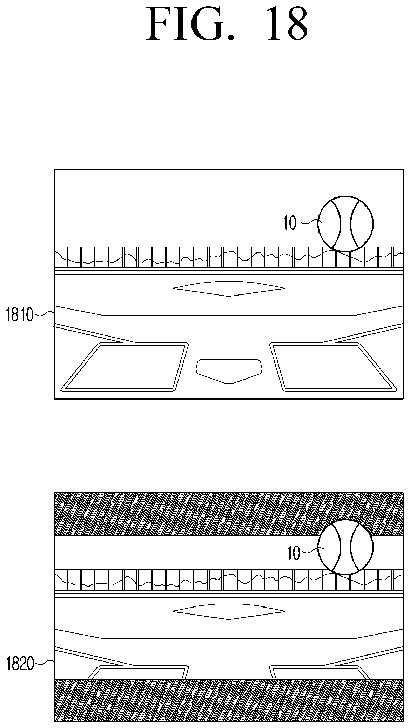

FIG. 18 is a diagram illustrating a composite image applied with a 3D effect according to an embodiment.

Referring to FIG. 18, the electronic apparatus 100 may obtain an input image 1810. The electronic apparatus 100 may obtain a composite image 1820 by applying the 3D effect to the input image 1810.

If an event occurs in which embodiments 1710, 1720, and 1730 in FIG. 17 are identified in order, the electronic apparatus 100 may generate the composite image 1820.

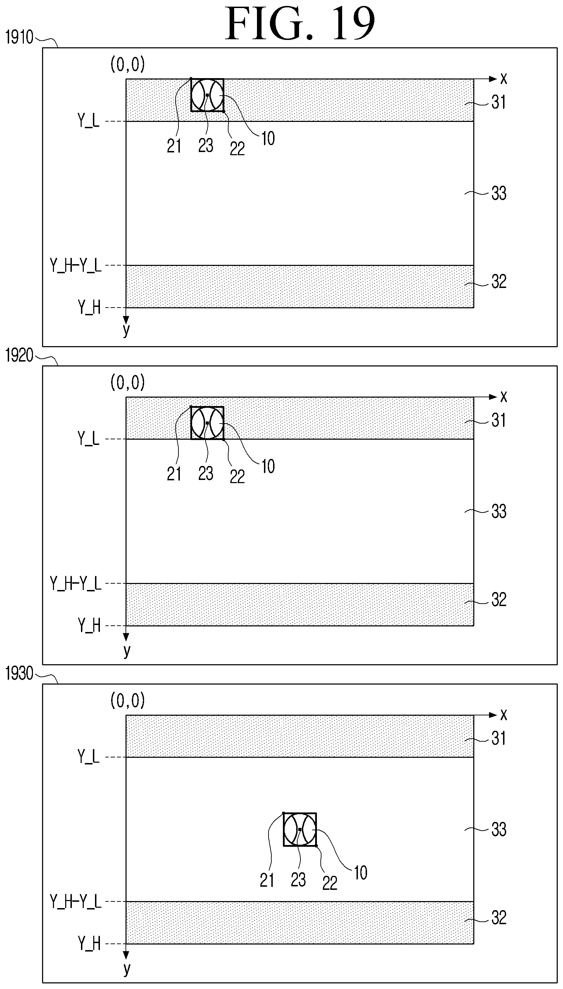

FIG. 19 is a diagram illustrating a predetermined event of a target object according to an embodiment.

Referring to embodiment 1910 in FIG. 19, the electronic apparatus 100 may identify the target object 10 from the first letter box area 31.

In one or more examples, if the y coordinate value of the minimum coordinate value 21 exceeds 0 and is less than or equal to Y_L, and the y coordinate value of the maximum coordinate value 22 exceeds 0 and is less than or equal to Y_L, the electronic apparatus 100 may identify that the target object 10 is present at the first letter box area 31.

Referring to embodiment 1920 in FIG. 19, the electronic apparatus 100 may identify that the target object 10 is in contact with the border line (y=Y_L) between the first letter box area 31 and the content area 33.

In one or more examples, if the y coordinate value of the minimum coordinate value 21 exceeds 0 and is less than or equal to Y_L, and the y coordinate value of the maximum coordinate value 22 is Y_L, the electronic apparatus 100 may identify that the target object 10 is in contact with the border line (y=Y_L) between the first letter box area 31 and the content area 33.

Referring to embodiment 1930 in FIG. 19, the electronic apparatus 100 may identify the target object 10 from the content area 33.

In one or more examples, if the y coordinate value of the minimum coordinate value 21 exceeds Y_L and is less than or equal to Y_H-Y_L, and the y coordinate value of the maximum coordinate value 22 exceeds Y_L and is less than or equal to Y_H-Y_L, the electronic apparatus 100 may identify that the target object 10 is present at the content area 33.

The predetermined event may be an event in which the maximum coordinate value 22 is positioned at the first letter box area 31 and then positioned at the content area 33.

The predetermined event may be an event in which the first letter box area 31 is positioned at the second letter box area 32 and then positioned at the content area 33.

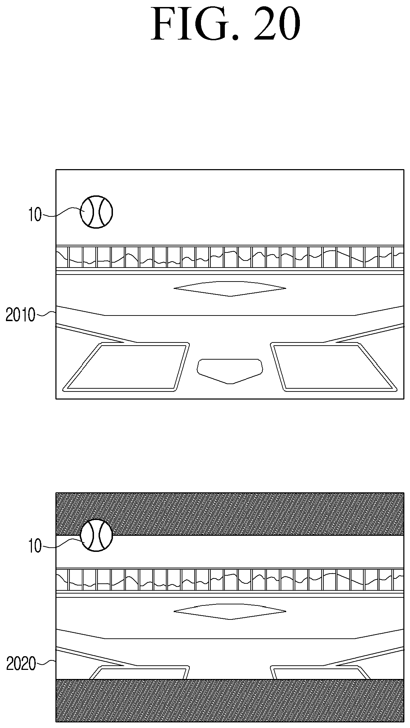

FIG. 20 is a diagram illustrating a composite image applied with a 3D effect according to an embodiment.

Referring to FIG. 20, the electronic apparatus 100 may obtain an input image 2010. The electronic apparatus 100 may obtain a composite image 2020 by applying the 3D effect to the input image 2010.

If an event occurs in which embodiments 1910, 1920, and 1930 in FIG. 19 are identified in order, the electronic apparatus 100 may generate the composite image 2020.

FIG. 21 is a diagram illustrating a predetermined event of a target object according to an embodiment.

Embodiment 2110 and embodiment 2120 in FIG. 21 may correspond to embodiment 1510 and embodiment 1520 in FIG. 15. Accordingly, redundant descriptions thereof will be omitted. FIG. 15 is an embodiment of analyzing content without the letter box and FIG. 21 is an embodiment of analyzing content with the letter box.

Referring to embodiment 2130 in FIG. 21, the electronic apparatus 100 may not identify the minimum coordinate value 21 and the average coordinate value 23. This is because the target object 10 may deviate from the content area 33. If the target object 10 deviates from the content area 33 in the content with the letter box, the electronic apparatus 100 may not accurately determine a position of the target object 10 in an area with the letter box.

The electronic apparatus 100 may identify the position of the target object 10 by using the average coordinate value 23 of the target object 10.

If the y coordinate value of the minimum coordinate value 21 is not identified, the y coordinate value of the maximum coordinate value 22 is not identified, and a y coordinate value of the average coordinate value 23 exceeds Y_L and is less than or equal to Y_H-Y_L, the electronic apparatus 100 may identify that the target object 10 is present at the first letter box area 31, the second letter box area 32, and the content area 33.

The electronic apparatus 100 may identify that a vertical length of the target object 10 is greater than a vertical length of the content area 33.

The electronic apparatus 100 may obtain (or predict or calculate), based on at least one of the minimum coordinate value 21, the maximum coordinate value 22, or the average coordinate value 23 not being identified, position information which is not identified based on the first letter box area 31, the second letter box area 32, the content area 33, the size of the target object 10, and the image size.

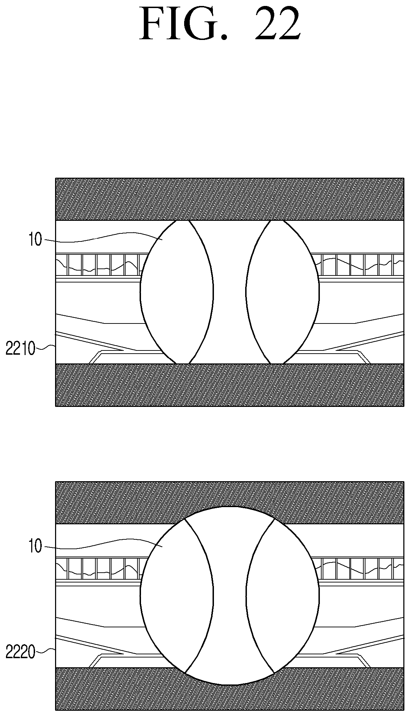

FIG. 22 is a diagram illustrating a composite image applied with a 3D effect according to an embodiment.

Referring to FIG. 22, the electronic apparatus 100 may obtain an input image 2210. The electronic apparatus 100 may obtain a composite image 2220 by applying the 3D effect to the input image 2210.

If an event occurs in which embodiments 2110, 2120, and 2130 in FIG. 21 are identified in order, the electronic apparatus 100 may generate the composite image 2220.

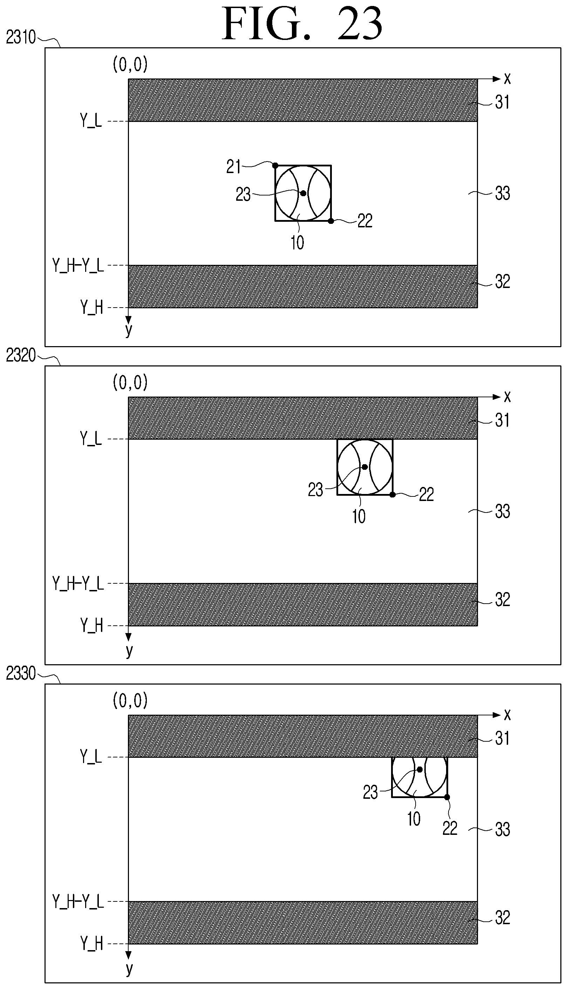

FIG. 23 is a diagram illustrating a predetermined event of a target object according to an embodiment.

Embodiment 2310 and embodiment 2320 in FIG. 23 may correspond to embodiment 1710 and embodiment 1720 in FIG. 17. Accordingly, redundant descriptions thereof will be omitted. FIG. 17 shows at least one embodiment of analyzing content without the letter box and FIG. 23 shows at least one embodiment of analyzing content with the letter box.

Referring to embodiment 2330 in FIG. 23, the electronic apparatus 100 may not identify the minimum coordinate value 21. This is because the target object 10 may deviate from the content area 33. If the target object 10 deviates from the content area 33 in the content with the letter box, the electronic apparatus 100 may not accurately determine a position of the target object 10 in an area with the letter box.

The electronic apparatus 100 may identify a position of the target object 10 by using the average coordinate value 23 of the target object 10.

If the y coordinate value of the minimum coordinate value 21 is not identified, and the y coordinate value of the maximum coordinate value 22 exceeds Y_L and is less than or equal to Y_H-Y_L, the electronic apparatus 100 may identify that the target object 10 is present at the first letter box area 31 and the content area 33.

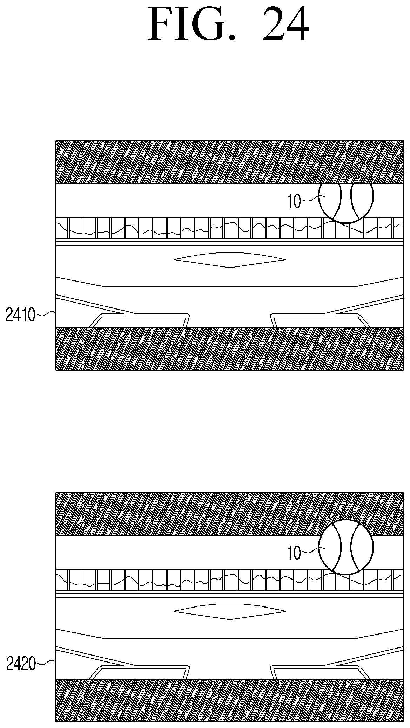

FIG. 24 is a diagram illustrating a composite image applied with a 3D effect according to an embodiment.

Referring to FIG. 24, the electronic apparatus 100 may obtain an input image 2410. The electronic apparatus 100 may obtain a composite image 2420 by applying the 3D effect to the input image 2410.

If an event occurs in which embodiments 2310, 2320, and 2330 in FIG. 23 are identified in order, the electronic apparatus 100 may generate the composite image 2420.

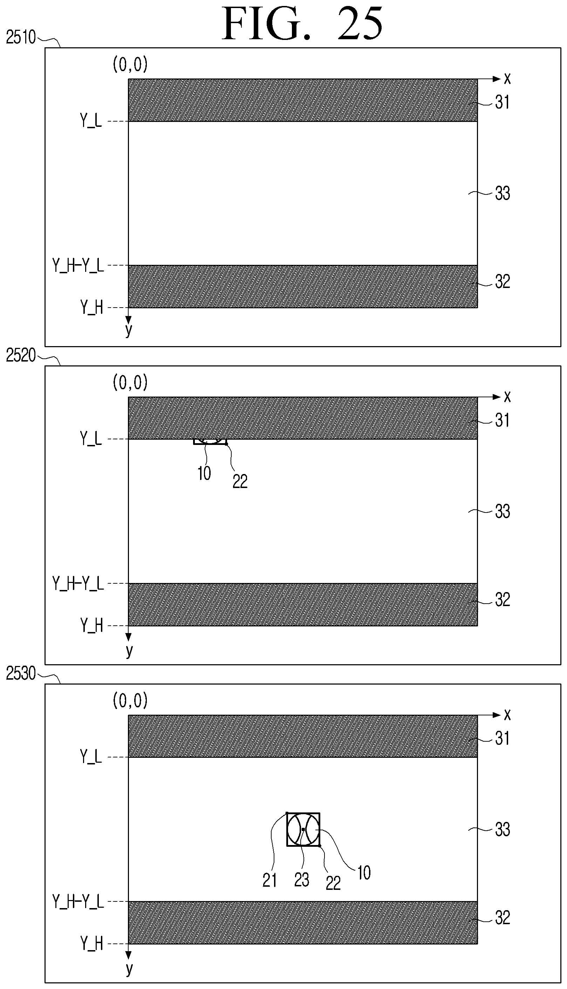

FIG. 25 is a diagram illustrating a predetermined event of a target object according to an embodiment.

Embodiment 2520 and embodiment 2530 in FIG. 25 may correspond to embodiment 1920 and embodiment 1930 in FIG. 19. Accordingly, redundant descriptions thereof will be omitted. FIG. 19 is an embodiment of analyzing content without the letter box and FIG. 25 is an embodiment of analyzing content with the letter box.

Referring to embodiment 2510 in FIG. 25, the electronic apparatus 100 may not identify the minimum coordinate value 21, the maximum coordinate value 22, and the average coordinate value 23. This is because the target object 10 may deviate from the content area 33. If the target object 10 deviates from the content area 33 in the content with the letter box, the electronic apparatus 100 may not accurately determine a position of the target object 10 in an area with the letter box.

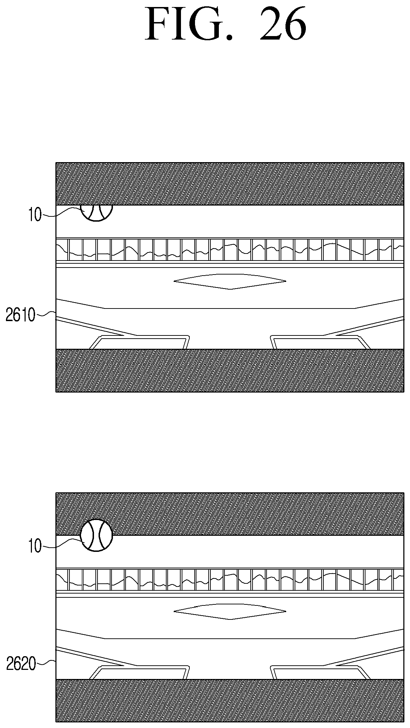

FIG. 26 is a diagram illustrating a composite image applied with a 3D effect according to an embodiment.

Referring to FIG. 26, the electronic apparatus 100 may obtain an input image 2610. The electronic apparatus 100 may obtain a composite image 2620 by applying the 3D effect to the input image 2610.

If an event occurs in which embodiments 2510, 2520, and 2530 in FIG. 25 are identified in order, the electronic apparatus 100 may generate the composite image 2620.

FIG. 27 is a diagram illustrating an embodiment in which content information is damaged.

Referring to FIG. 27, the electronic apparatus 100 may obtain an input image 2710 which includes content information 2711 and 2712. At least a portion of the content information 2711 and 2712 may not be displayed in a composite image 2720 according to positions at which the content information 2711 and 2712 is displayed.

If the content information 2711 and 2712 is key information which is to be delivered to viewers, there may be a problem of key information being omitted from the composite image 2720.

FIG. 28 is a diagram illustrating an operation of providing content information according to an embodiment.

Referring to embodiment 2810 in FIG. 28, the electronic apparatus 100 may determine the size of the letter box (or a vertical length in the y-axis direction) based on position information of content information 2811 and 2812. The electronic apparatus 100 may adjust the size of the letter box such that the content information 2811 and 2812 are not deleted according to a letter box which is to be generated (or added).

The electronic apparatus 100 may identify the content information 2811 and 2812 from the input image.

The electronic apparatus 100 may obtain position information of the content information 2811 and 2812. The electronic apparatus 100 may obtain a minimum value of the y coordinate value from the position information of the content information 2811 and 2812. The electronic apparatus 100 may determine the minimum value of the y coordinate value from the position information of the content information 2811 and 2812 as the vertical length of the letter box.

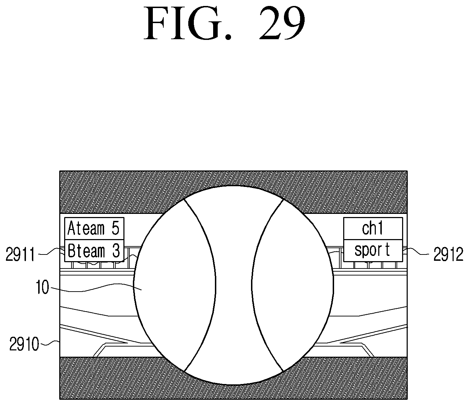

FIG. 29 is a diagram illustrating an operation of providing content information according to an embodiment.

Referring to embodiment 2910 in FIG. 29, the electronic apparatus 100 may generate a composite image by changing positions of content information 2911 and 2912.

If the content information 2911 and 2912 is identified in the input image, the electronic apparatus 100 may identify positions of the content information 2911 and 2912. The electronic apparatus 100 may extract only the content information 2911 and 2912. The electronic apparatus 100 may include the extracted content information 2911 and 2912 in the composite image.

The electronic apparatus 100 may generate (or obtain) a second composite image by adding the extracted content information 2911 and 2912 to a first composite image.

The positions at which the content information 2911 and 2912 are displayed may vary according to the user setting.

In one or more examples, the electronic apparatus 100 may display the content information 2911 and 2912 at positions spaced apart by a predetermined distance from a letter box which is to be generated.

In one or more examples, the electronic apparatus 100 may display the content information 2911 and 2912 at a second position which is spaced apart by a vertical length of a letter box that is generated from a first position at which the content information 2911 and 2912 have been extracted.

FIG. 30 is a diagram illustrating an operation of generating a composite image when there is no letter box according to an embodiment.

Referring to FIG. 30, the electronic apparatus 100 may obtain an input image 3010.

The electronic apparatus 100 may obtain a basic layer 3021 based on the input image 3010. The basic layer 3021 may be an image with the letter box added to the input image 3010. The electronic apparatus 100 may generate the basic layer 3121 which includes the letter box without a resolution of the input image 3010 being changed.

The electronic apparatus 100 may obtain a 3D layer 3022 based on the input image 3010. The 3D layer 3022 may include a portion of the target object. The portion of the target object included in the 3D layer 3022 may be information which is displayed at the letter box. The electronic apparatus 100 may extract the portion of the target object which is displayed at the letter box area in the input image 3010 and include the above in the 3D layer 3022.

The 3D layer 3022 may not store data at a position corresponding to the content area 33 or may include null data.

The electronic apparatus 100 may generate (or obtain) a composite image 3030 by combining the basic layer 3021 and the 3D layer 3022. The electronic apparatus 100 may provide the composite image 3030 to the user as an output image.

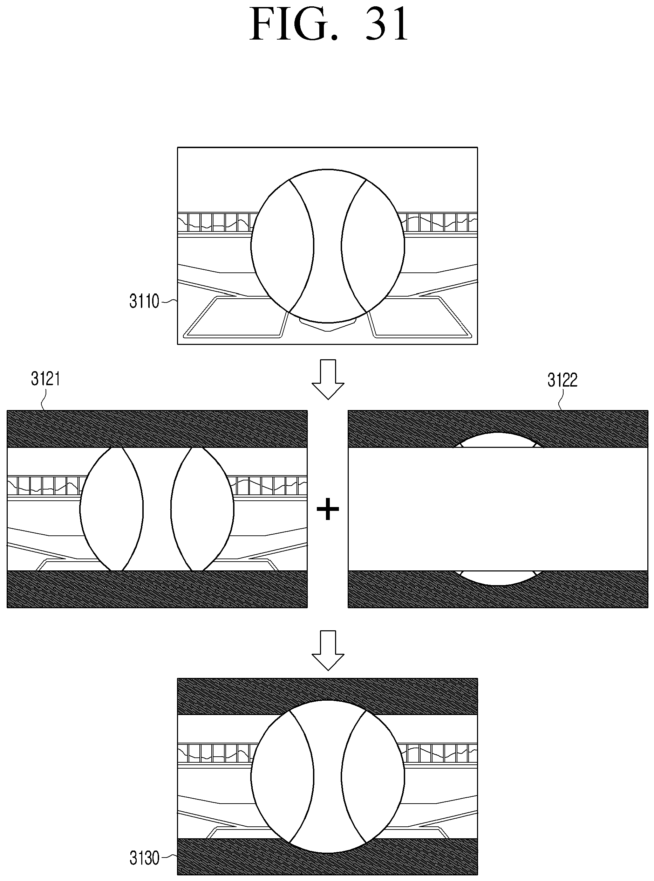

FIG. 31 is a diagram illustrating an operation of generating a composite image when there is no letter box according to an embodiment.

An input image 3110, the basic layer 3121, a 3D layer 3122, and a composite image 3130 in FIG. 31 may correspond to the input image 3010, the basic layer 3021, the 3D layer 3022, and the composite image 3030 in FIG. 30. Accordingly, redundant descriptions thereof will be omitted.

The 3D layer 3122 in FIG. 31 may include the letter box unlike the 3D layer 3022 in FIG. 30. The electronic apparatus 100 may obtain the 3D layer 3122 which includes the letter box and a portion of the target object which is to be displayed over the letter box.

If the letter box is added to both the basic layer 3121 and the 3D layer 3122 as in FIG. 31, the letter box may be displayed overlapped, and the target object may be displayed more naturally.

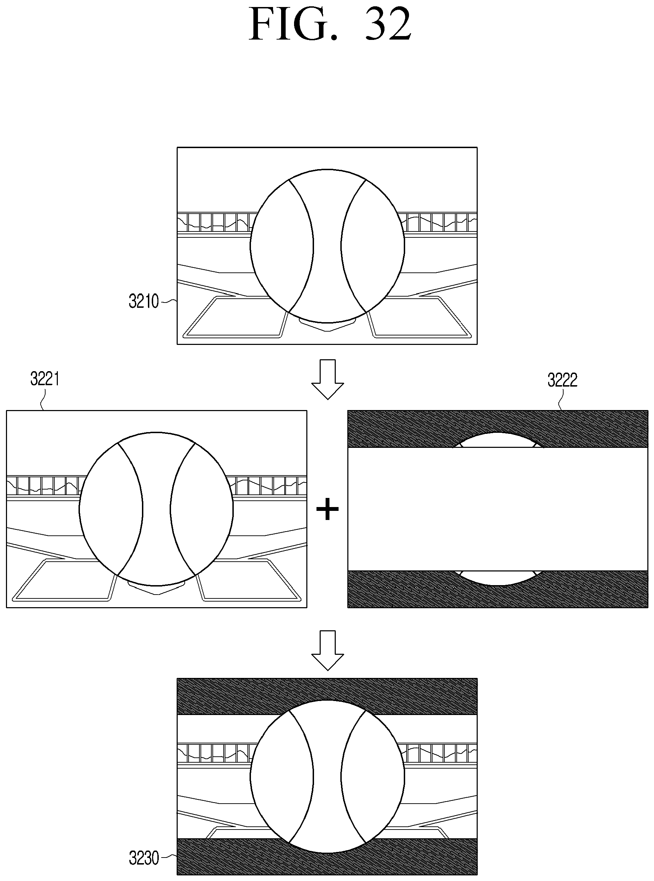

FIG. 32 is a diagram illustrating an operation of generating a composite image when there is no letter box according to an embodiment.

An input image 3210, a basic layer 3221, a 3D layer 3222, and a composite image 3230 in FIG. 32 may correspond to the input image 3110, the basic layer 3121, the 3D layer 3122, and the composite image 3130 in FIG. 31. Accordingly, redundant descriptions thereof will be omitted.

The basic layer 3221 in FIG. 32 may not be added with the letter box unlike the basic layer 3121 in FIG. 31. Because the letter box is included in the 3D layer 3122, the electronic apparatus 100 may not add the letter box to the basic layer 3121.

As in FIG. 32, if the letter box is not added to the basic layer 3121 and the letter box is added to the 3D layer 3122, an amount of computation may be reduced.

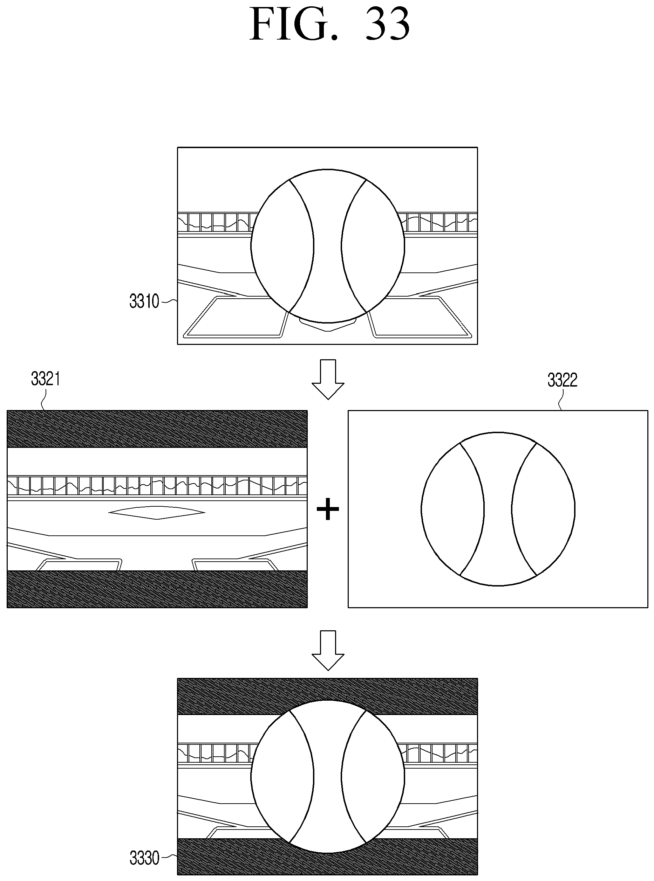

FIG. 33 is a diagram illustrating an operation of generating a composite image when there is no letter box according to an embodiment.

Referring to FIG. 33, the electronic apparatus 100 may obtain an input image 3310.

The electronic apparatus 100 may extract a target object from the input image 3310.

The electronic apparatus 100 may obtain a basic layer 3321 by removing the target object from the input image 3310 and changing a resolution of the input image 3310. The electronic apparatus 100 may obtain the basic layer 3321 with the target object removed based on the input image 3310.

The basic layer 3321 may be an image with the letter box added to the input image 3310. The electronic apparatus 100 may change the resolution of the input image 3310. The electronic apparatus 100 may change the resolution of the input image 3310 based on the content area 33. The electronic apparatus 100 may change the resolution of the input image 3310 such that image information included in the input image 3310 is fully displayed at the content area 33. The electronic apparatus 100 may generate the basic layer 3321 with the letter box included having changed the resolution of the input image 3310.

The electronic apparatus 100 may obtain a 3D layer 3322 based on the input image 3310. The 3D layer 3322 may include an extracted target object. A portion of the target object included in the 3D layer 3322 may be displayed at the letter box and the remaining portion may be displayed at the content area.

The electronic apparatus 100 may generate (or obtain) a composite image 3330 by combining the basic layer 3321 and the 3D layer 3322. The electronic apparatus 100 may provide the composite image 3330 to the user as an output image.

FIG. 34 is a diagram illustrating an operation of generating a composite image when there is a letter box according to an embodiment.

Referring to FIG. 34, the electronic apparatus 100 may obtain an input image 3410.

The electronic apparatus 100 may obtain a first basic layer 3421-1 by removing the letter box from the input image 3410. The first basic layer 3421-1 may be a layer with the resolution changed. A size of the input image 3410 may increase (or expand) by about the size the letter box is deleted from the input image 3410. The electronic apparatus 100 may obtain a second basic layer 3421-2 by adding the letter box of a predetermined size from the first basic layer 3421-1. The electronic apparatus 100 may obtain the second basic layer 3421-2 by maintaining a resolution of the first basic layer 3421-1.

The electronic apparatus 100 may obtain a 3D layer 3422 based on the input image 3410. The 3D layer 3422 may include a portion of the target object. The portion of the target object included in the 3D layer 3422 may be information displayed at the letter box. The electronic apparatus 100 may extract the portion of the target object displayed at the letter box area from the first basic layer 3421-1 and include the same in the 3D layer 3422.

The 3D layer 3422 may not store data at a position corresponding to the content area 33 or may include null data.

The electronic apparatus 100 may generate (or obtain) a composite image 3430 by combining the second basic layer 3421-2 and the 3D layer 3422. The electronic apparatus 100 may provide the composite image 3430 to the user as an output image.

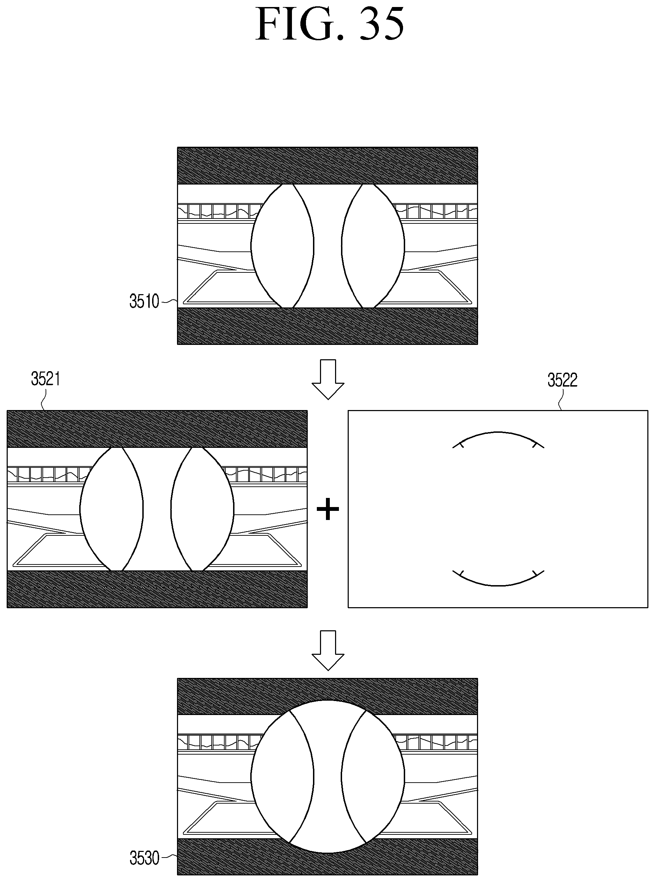

FIG. 35 is a diagram illustrating an operation of generating a composite image when there is a letter box according to an embodiment.

Referring to FIG. 35, the electronic apparatus 100 may obtain an input image 3510. The electronic apparatus 100 may identify the letter box from the input image 3510. The electronic apparatus 100 may identify a target object which deviates from the content area 33 in the input image 3510.

The electronic apparatus 100 may obtain the input image 3510 as a basic layer 3521.

The electronic apparatus 100 may determine whether the target object can be displayed at the letter box. If the target object can be displayed at the letter box (or if a predetermined event is identified), the electronic apparatus 100 may obtain a 3D layer 3522 by generating a portion of the target object such that the target object can be displayed at the letter box.

Information (or shape) of the target object included in the 3D layer 3522 may not be included in the input image 3510. The electronic apparatus 100 may generate a portion of the target object to display additionally and include the same in the 3D layer 3522.

The electronic apparatus 100 may generate (or obtain) a composite image 3530 by combining the basic layer 3521 and the 3D layer 3522. The electronic apparatus 100 may provide the composite image 3530 to the user as an output image.

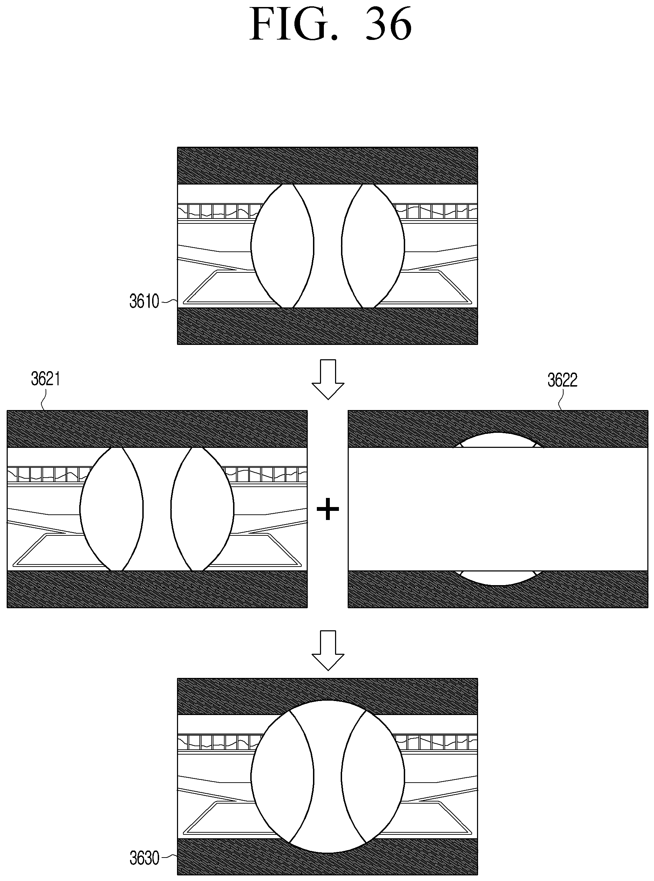

FIG. 36 is a diagram illustrating an operation of generating a composite image when there is a letter box according to an embodiment.

An input image 3610, a basic layer 3621, a 3D layer 3622, and a composite image 3630 in FIG. 36 may correspond to the input image 3510, the basic layer 3521, the 3D layer 3522, and the composite image 3530 in FIG. 35. Accordingly, redundant descriptions thereof will be omitted.

The 3D layer 3622 in FIG. 36 may include the letter box unlike the 3D layer 3522 in FIG. 35. The electronic apparatus 100 may obtain the 3D layer 3622 which includes the letter box and a portion of the target object which is to be displayed over the letter box.

If the letter box is added to both the basic layer 3621 and the 3D layer 3622 as in FIG. 36, the letter box may be displayed overlapped, and the target object may be displayed more naturally.

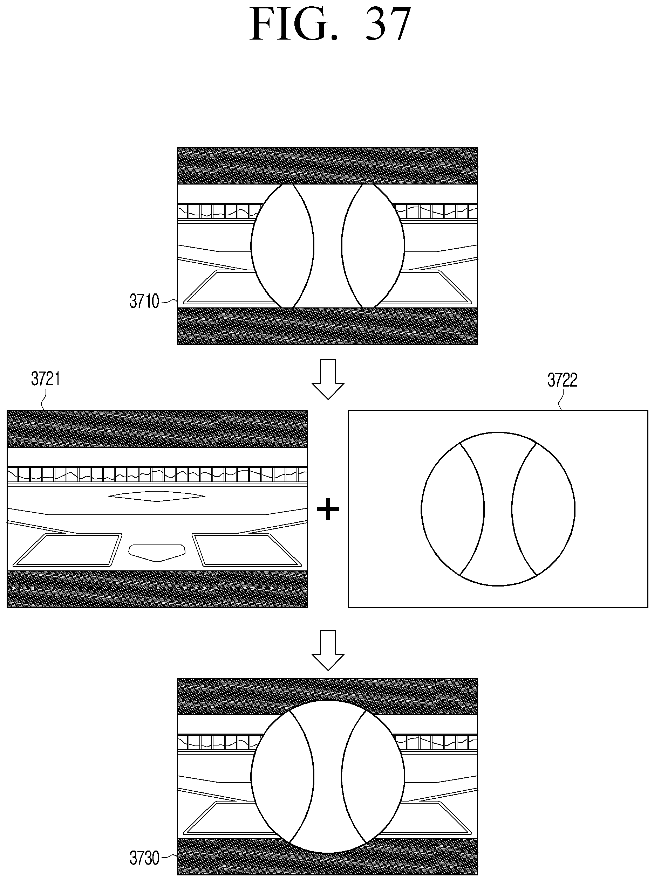

FIG. 37 is a diagram illustrating an operation of generating a composite image when there is a letter box according to an embodiment.

Referring to FIG. 37, the electronic apparatus 100 may obtain an input image 3710.

The electronic apparatus 100 may extract the target object from the input image 3710.

The electronic apparatus 100 may obtain a basic layer 3721 by removing the target object from the input image 3710. The electronic apparatus 100 may obtain the basic layer 3721 while maintaining a resolution of the input image 3710.

The electronic apparatus 100 may obtain a 3D layer 3722 based on the input image 3710. The 3D layer 3722 may include the extracted target object and an additionally generated portion of the target object. The portion of the target object included in the 3D layer 3722 may be displayed at the letter box and the remaining portion may be displayed at the content area. The portion of the target object displayed at the letter box (or the letter box area) may be information newly generated by the electronic apparatus 100.

The electronic apparatus 100 may generate (or obtain) a composite image 3730 by combining the basic layer 3721 and the 3D layer 3722. The electronic apparatus 100 may provide the composite image 3730 to the user as an output image.

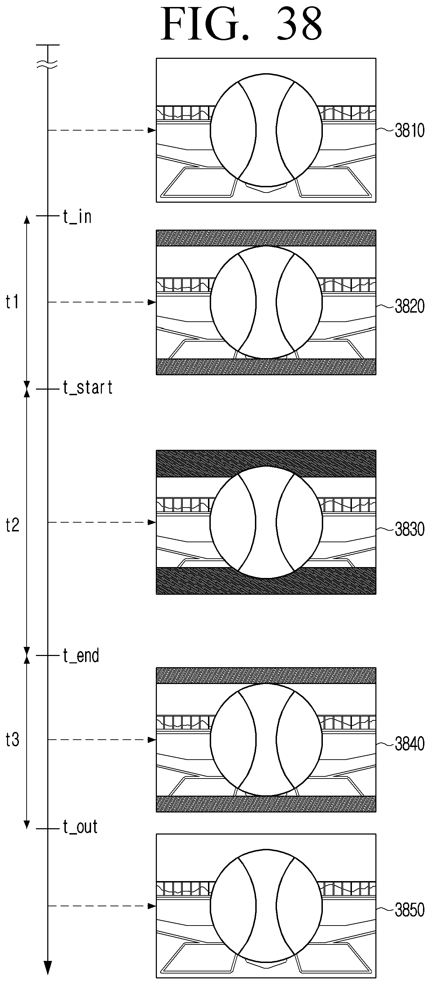

FIG. 38 is a diagram illustrating an operation of changing a size of a letter box.

Referring to FIG. 38, the electronic apparatus 100 may identify a target section to apply the 3D effect from a whole section of content.

It may be assumed that the letter box is added to apply the 3D effect in a content which does not include the letter box. The electronic apparatus 100 may identify a target section t2.

The target section t2 may be from t_start to t_end.

The electronic apparatus 100 may change the vertical length of the letter box gradually (or linearly) to provide a natural 3D effect.

The electronic apparatus 100 may change the vertical length of the letter box from 0 to Y_L by a first threshold time t1.

The electronic apparatus 100 may change the vertical length of the letter box from Y_L to 0 by a second threshold time t3.

The first threshold time t1 may be same as the second threshold time t3.

The first threshold time t1 and the second threshold time t3 may be changed according to the user setting.

The first threshold time t1 and the second threshold time t3 may be determined based on the target section t2. If the target section t2 is lengthened, the first threshold time t1 and the second threshold time t3 may also be lengthened. If the target section t2 is shortened, the first threshold time t1 and the second threshold time t3 may also be shortened.

A starting time-point at which the letter box is initially generated may be t_in and an ending time-point at which the letter box is lastly present may be t_out within one cycle.

Prior to the t_in time-point, the electronic apparatus 100 may provide an image 3810 without the letter box.

At the first threshold time t1, the electronic apparatus 100 may provide an image 3820 which includes the gradually increasing letter box.

At the target section t2, the electronic apparatus 100 may provide an image 3830 which includes the fixed letter box.

At the second threshold time t3, the electronic apparatus 100 may provide an image 3840 which includes the gradually decreasing letter box.

After the t_out time-point, the electronic apparatus 100 may provide an image 3850 without the letter box.

The electronic apparatus 100 may change color information of the letter box according to the size of the letter box being changed. As the size of the letter box is changed, the color of the letter box may also be changed. The color of the letter box may become darker as the size of the letter box increases. Brightness of the letter box may decrease (a darker impression among the same color) as the size of the letter box increases. The brightness of the letter box may increase (a brighter impression among the same color) as the size of the letter box decreases.

FIG. 39 is a diagram illustrating an operation of playing back content with (or having) a delay time placed therein.

Referring to FIG. 39, the electronic apparatus 100 may provide content in a streaming method. When using the streaming method, the electronic apparatus 100 may provide the user with content received from an external server (or an external apparatus) in real-time.

The electronic apparatus 100 may delay a playback time-point by a delay time to secure a processing time for applying the 3D effect. The electronic apparatus 100 may display a predetermined screen 3910 for a third threshold time t4 while the playback time-point is being delayed.

The third threshold time t4 may be a delay time.

The predetermined screen 3910 may include at least one of a graphic UI 3911 showing the 3D effect or a text UI 3912 showing the 3D.

The electronic apparatus 100 may provide an image 3920 applied with the 3D effect at the target section t2.

The third threshold time t4 may be time necessary in applying the 3D effect to one target section. The third threshold time t4 may be a predetermined time. If the third threshold time t4 is set, the electronic apparatus 100 may provide the user with the 3D effect seamlessly even in a state in which the content is not fully downloaded.

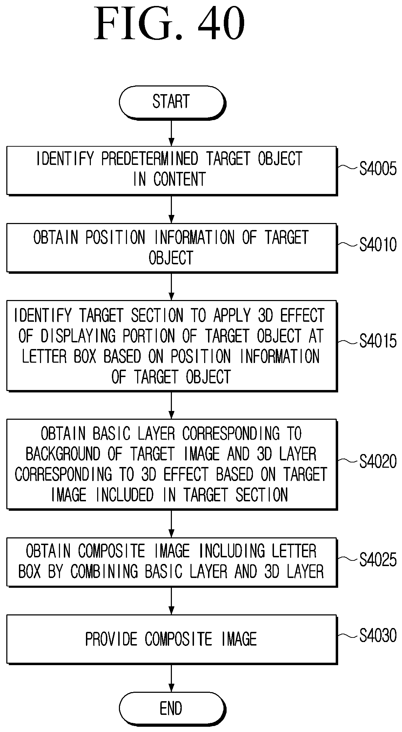

FIG. 40 is a flowchart illustrating a controlling method of the electronic apparatus 100 according to an embodiment.

Referring to FIG. 40, a controlling method of the electronic apparatus storing content may include identifying the predetermined target object in the content (S4005), obtaining position information of the target object (S4010), identifying the target section to apply the 3D effect of displaying a portion of the target object at the letter box based on the position information of the target object (S4015), obtaining the basic layer corresponding to the background of the target image and the 3D layer corresponding to the 3D effect based on the target image included in the target section (S4020), obtaining the composite image including the letter box by combining the basic layer and the 3D layer (S4025), and providing the composite image (S4030).

The controlling method may further include identifying whether the letter box is included in the content, and the obtaining the composite image (S4025) may include obtaining, based on the letter box not being included in the content, the composite image by adding the letter box to at least one of the basic layer or the 3D layer.

The obtaining the 3D layer may include obtaining the 3D image corresponding to the target object which is to be displayed at the letter box, and obtaining the 3D layer which includes the 3D image.

The controlling method may further include determining the position of the letter box based on the position of the content information included in the content, and the content information may include at least one of the graphic user interface (UI) or the text UI representing the content.

The target object may be an object which changes position in the plurality of images included in the content, and the identifying the target object (S4005) may include identifying the target object from the plurality of objects by analyzing the features of the plurality of objects identified in the content.

The identifying the target section (S4015) may include identifying, when the predetermined event is identified based on the position information, the target section based on the time-point at which the predetermined event is identified.

The identifying the target section (S4015) may include distinguishing the letter box area and the content area from the whole area of the content, and identifying as the predetermined event having been identified when an event in which the target object moves from the letter box area to the content area or an event in which the target object moves from the content area to the letter box area is identified.

The identifying the predetermined event may include obtaining the first position information of the target object at the first time-point and the second position information of the target object at the second time-point, and identifying the predetermined event based on the first position information and the second position information.

The first position information may include at least one of the minimum coordinate value, the maximum coordinate value, or the average coordinate value of the target object at the first time-point, the second position information may include at least one of the minimum coordinate value, the maximum coordinate value, or the average coordinate value of the target object at the second time-point, and the identifying the predetermined event may include obtaining the movement information of the target object based on the first position information and the second position information, and identifying the predetermined event based on the movement information.

The obtaining the position information (S4010) may include identifying the bounding box of the target object, obtaining the first position information based on the plurality of coordinate values representing the bounding box at the first time-point, and obtaining the second position information based on the plurality of coordinate values representing the bounding box at the second time-point.

The controlling method of the electronic apparatus 100 as in FIG. 40 may be executed on the electronic apparatus 100 having configurations of FIG. 2 or FIG. 3, and may be executed on an electronic apparatus having other configurations.

Methods according to the various embodiments of the disclosure described above may be implemented in an application form installable in an electronic apparatus of the related art.

In addition, the methods according to the various embodiments of the disclosure described above may be implemented with only a software upgrade or a hardware upgrade of the electronic apparatus of the related art.

In addition, the various embodiments of the disclosure described above may be performed through an external server of at least one of an embedded server provided in the electronic apparatus, or the electronic apparatus and a display apparatus.

According to an embodiment of the disclosure, the various embodiments described above may be implemented with software including instructions stored in a machine-readable storage medium (e.g., computer). The machine may call an instruction stored in the storage medium, and as an apparatus operable according to the called instruction, may include an electronic apparatus according to the above-mentioned embodiments. Based on a command being executed by the processor, the processor may directly or using other elements under the control of the processor perform a function corresponding to the command. The command may include a code generated by a compiler or executed by an interpreter. The machine-readable storage medium may be provided in the form of a non-transitory storage medium. Herein, 'non-transitory' merely means that the storage medium is tangible and does not include a signal, and the term does not differentiate data being semi-permanently stored or being temporarily stored in the storage medium.

In addition, according to an embodiment of the disclosure, a method according to the various embodiments described above may be provided included a computer program product. The computer program product may be exchanged between a seller and a purchaser as a commodity. The computer program product may be distributed in the form of the machine-readable storage medium (e.g., a compact disc read only memory (CD-ROM)), or distributed online through an application store (e.g., PLAYSTORE^{™}). In the case of online distribution, at least a portion of the computer program product may be stored at least temporarily in the storage medium such as a server of a manufacturer, a server of an application store, or a memory of a relay server, or temporarily generated.

In addition, the respective elements (e.g., a module or a program) according to the various embodiments described above may be formed as a single entity or a plurality of entities, and some sub-elements from the above-mentioned corresponding sub-elements may be omitted, or other sub-elements may be further included in the various embodiments. Alternatively or additionally, some elements (e.g., modules or programs) may be integrated into one entity to perform the same or similar functions performed by the respective elements prior to integration. Operations performed by a module, a program, or another element, in accordance with various embodiments, may be executed sequentially, in a parallel, repetitively, or in a heuristic manner, or at least some operations may be executed in a different order, omitted or a different operation may be added.

While certain embodiments of the disclosure has been particularly shown and described, it will be understood that various changes in form and details may be made therein without departing from the spirit and scope of the following claims.

## Claims

1. An electronic apparatus, comprising:
at least one memory configured to store content and instructions; and
at least one processor operatively connected to the at least one memory, the at least one processor being configured to execute the instructions to:
identify a target object in the content stored in the at least one memory,
obtain position information of the target object,
identify a target section to apply a three-dimensional (3D) effect of displaying a portion of the target object at a letter box based on the position information of the target object, the target section comprising a target image,
obtain a basic layer corresponding to a background of the target image and a 3D layer corresponding to the 3D effect based on the target image,
obtain a composite image comprising the letter box by combining the basic layer and the 3D layer, and
provide the composite image.

2. The electronic apparatus of claim 1, wherein the at least one processor is further configured to execute the instructions to:
identify whether the content comprises the letter box, and
based on identifying that the content does not comprise the letter box, obtain the composite image by adding the letter box to at least one of the basic layer or the 3D layer.

3. The electronic apparatus of claim 1, wherein the at least one processor is further configured to execute the instructions to:
obtain a 3D image corresponding to the target object, and
obtain the 3D layer comprising the 3D image.

4. The electronic apparatus of claim 1, wherein the at least one processor is further configured to execute the instructions to:
determine a position of the letter box based on a position of content information of the content, and
wherein the content information comprises at least one of a graphic user interface (UI) or a text UI representing the content.

5. The electronic apparatus of claim 1, wherein the content comprises a plurality of images,
wherein the target object changes position in the plurality of images, and
wherein the at least one processor is further configured to execute the instructions to:
identify the target object from a plurality of objects identified in the content by analyzing features of the plurality of objects.

6. The electronic apparatus of claim 1, wherein the at least one processor is further configured to execute the instructions to:
based on the position information, identify a predetermined event, and
based on a time-point at which the predetermined event is identified, identify the target section.

7. The electronic apparatus of claim 6, wherein the at least one processor is further configured to execute the instructions to:
identify a letter box area and a content area from a whole area of the content,
identify a first event in which the target object moves from the letter box area to the content area or a second event in which the target object moves from the content area to the letter box area, and
identify the first event or the second event as the predetermined event.

8. The electronic apparatus of claim 7, wherein the at least one processor is further configured to execute the instructions to:
obtain first position information of the target object at a first time-point and second position information of the target object at a second time-point, and
identify the predetermined event based on the first position information and the second position information.

9. The electronic apparatus of claim 8, wherein the first position information comprises at least one of a first minimum coordinate value, a first maximum coordinate value, or a first average coordinate value of the target object at the first time-point,
wherein the second position information comprises at least one of a second minimum coordinate value, a second maximum coordinate value, or a second average coordinate value of the target object at the second time-point, and
wherein the at least one processor is further configured to execute the instructions to:
obtain movement information of the target object based on the first position information and the second position information, and
identify the predetermined event based on the movement information.

10. The electronic apparatus of claim 9, wherein the at least one processor is further configured to execute the instructions to:
identify a bounding box of the target object,
obtain the first position information based on a first plurality of coordinate values representing the bounding box at the first time-point, and
obtain the second position information based on a second plurality of coordinate values representing the bounding box at the second time-point.

11. A method of controlling an electronic apparatus storing content, the method comprising:
identifying a target object in the content;
obtaining position information of the target object;
identifying a target section to apply a three-dimensional (3D) effect of displaying a portion of the target object at a letter box based on the position information of the target object, the target section comprising a target image;
obtaining a basic layer corresponding to a background of the target image and a 3D layer corresponding to the 3D effect based on the target image;
obtaining a composite image comprising the letter box by combining the basic layer and the 3D layer; and
providing the composite image.

12. The method of claim 11, further comprising:
identifying whether the content comprises the letter box; and
based on identifying that the content does not comprises the letter box, obtaining the composite image by adding the letter box to at least one of the basic layer or the 3D layer.

13. The method of claim 11, further comprising:
obtaining a 3D image corresponding to the target object; and
obtaining the 3D layer comprising the 3D image.

14. The method of claim 11, further comprising:
determining a position of the letter box based on a position of content information of the content,
wherein the content information comprises at least one of a graphic user interface (UI) or a text UI representing the content.

15. The method of claim 11, wherein content comprises a plurality of images,
wherein the target object changes position in the plurality of images, and
wherein the method further comprises:
identifying the target object from a plurality of objects identified in the content by analyzing features of the plurality of objects.
